# EUROPEAN PATENT APPLICATION

(11) **EP 1 980 901 A1**
(43) Date of publication of application: **15.10.2008**
(21) Application number: 08007240.8
(22) Date of filing: 11.04.2008
(51) Int. Cl.: G02F 1/13363, G02B 5/30, C09K 19/38

(54) **Process of producing a substrate for liquid crystal display devices comprising a patterned optical retarder**

(30) Priority: 12.04.2007 JP 2007104685; 19.02.2008 JP 2008037519
(71) Applicant: Fujifilm Corporation, Tokyo 106-0031 (JP)
(72) Inventor: Nakajima, Masao, Kanagawa 250-0193 (JP); Kaneiwa, Hideki, Kanagawa 250-0193 (JP); Amimori, Ichiro, Kanagawa 250-0193 (JP); Morishima, Shinichi, Kanagawa 250-0193 (JP); Tomita, Hidetoshi, Tokyo 106-0031 (JP)
(74) Representative: HOFFMANN EITLE

(57) **Abstract**

A process of producing a substrate for a liquid crystal display device comprising an optically anisotropic layer (15), the process including the formation of the optically anisotropic layer (15) by a process comprising the following steps [1] to [3]:
[1] preparing a substrate (12) having a raw optically anisotropic layer (15);
[2] subjecting the raw optically anisotropic layer (15) to patterned exposures of two or more types under different exposure conditions (A,B,C), this step resulting in the formation of domains (15A,15B,15C) exhibiting different retardations;
[3] subjecting the substrate obtained after the exposure to a heat treatment at 80°C or higher and 400°C or lower. By the process, a substrate (19) for liquid crystal display device which contributes to reducing viewing angle dependence of colors in a liquid crystal display device can be easily produced.

## Description

### TECHNICAL FIELD

The present invention relates to a process of producing a substrate for liquid crystal display device, particularly a process of producing a substrate for liquid crystal display device comprising an optically anisotropic layer having patterned retardation.

### RELATED ART

A CRT (cathode ray tube) has been mainly employed in various display devices used for office automation (OA) equipment such as a word processor, a notebook-sized personal computer and a personal computer monitor, mobile phone terminal and television set. In recent years, a liquid crystal display device (LCD) has more widely been used in place of a CRT, because of its thinness, lightweight and low power consumption. A liquid crystal display device usually comprises a liquid crystal cell and polarizing plates. The polarizing plate usually has protective films and a polarizing film, and is obtained typically by dying a polarizing film composed of a polyvinyl alcohol film with iodine, stretching the film, and laminating the film with the protective films on both surfaces. A transmissive liquid crystal display device usually comprises polarizing plates on both sides of a liquid crystal cell, and occasionally comprises one or more optical compensation films. A reflective liquid crystal display device usually comprises a reflector plate, a liquid crystal cell, one or more optical compensation films, and a polarizing plate in this order. A liquid crystal cell comprises liquid-crystalline molecules, two substrates encapsulating the liquid-crystalline molecules, and electrode layers applying voltage to the liquid-crystalline molecules. The liquid crystal cell switches ON and OFF displays depending on variation in orientation state of the liquid-crystalline molecules, and is applicable both to transmission type and reflective type, of which display modes ever proposed include TN (twisted nematic), VA (vertically aligned), IPS (in-plane switching), FFS(fringe field switching), OCB (optically compensatory bend), ECB (electrically controlled birefringence), and STN(super twisted nematic). Color and contrast displayed by the conventional liquid crystal display device, however, vary depending on the viewing angle. Therefore, it cannot be said that the viewing angle characteristics of the liquid crystal display device is superior to those of the CRT.

In order to improve the viewing angle characteristics, optical compensation films for viewing-angle optical compensation have been used. There have been proposed various LCDs, employing a mode and an optical compensation film having an appropriate optical property for the mode, excellent in contrast characteristics without dependency on viewing angles. Particularly, OCB, VA or IPS modes have achieved a wide-viewing mode, and LCDs employing such a mode can give a good contrast characteristic in all around view. In recent years, LCDs employing such a mode become widely used as a home screen having a wide screen of over 30 inches.

Among them, VA mode is now most widely used as LCD mode, because it enables wide viewing angle by applying an optical compensation film for viewing-angle optical compensation, as well as it provides frontal display characteristics as excellent as that of TN mode. In VA mode, wider viewing angle can be achieved by using both of uniaxially oriented retardation plate having positive refractive-index anisotropy in the direction of film surface (positive a-plate) and optically negative uniaxial retardation plate having an optical axis in the direction vertical to film surface (negative c-plate)( pages 12 and 13, and Fig.54 of Japanese Laid-Open Patent Publication "Tokkai" Heisei No. 10-153802).

An optical compensation sheet can effectively contribute to reducing viewing angle dependence of contrast, but cannot contribute to reducing viewing angle dependence of color sufficiently, and reducing viewing angle dependence of color is considered as an important problem to be solved for LCD. Viewing angle dependence of color of LCD is ascribable to difference in wavelength of three representative colors of R, G and B. Even when given an equal retardation, the changes of R, G and B polarized lights are different each other. In view of optimizing this, it is necessary to optimize wavelength dependence of birefringence, i.e., wavelength dispersion of birefringence of an optically anisotropic material with respect to the wavelengths of R, G and B. The LCD is, however, still on the way to thorough improvement in viewing angle characteristics of color, because it is still not easy to control the wavelength dispersion of birefringence of liquid crystal molecules used for ON/OFF display, or the wavelength dispersion of birefringence of optical compensation sheet.

In order to reduce viewing angle dependence of color, optical compensation of each of three colors, R, G, and B, independently by using a method of pattering the optical compensation sheet together with color filter in a liquid crystal cell has been proposed (Japanese Laid-Open Patent Publication "Tokkai" No. 2004-37837). Viewing angle dependence of color can be reduced by using such optical compensation method as a λ/4 plate for reflection-type liquid crystal display device, or as a compensation sheet for various-mode LCD. However, it is very difficult to form an optically anisotropic layer having optically uniform retardation characteristics, with controlling the position of R, G, and B patterned on a color filter by selecting a material patternable in a liquid crystal cell.

A method of forming each of RGB optically anisotropic layers three times, by means of photolithography or the like have been proposed as a method of patterning of an optically anisotropic layer in a liquid crystal cell to each of RGB filters in a color filter (Japanese Laid-Open Patent Publication "Tokkai" No. 2004-240102). However, the cost derived from the increase of the production steps is considered as a problem.

### SUMMARY OF THE INVENTION

An object of the present invention is to provide a process of easily producing a substrate for liquid crystal display device which contribute to reducing viewing angle dependence of color of a liquid crystal display device.

The present invention thus provides the following 1 to 20.
1. A process of producing a substrate for liquid crystal display device comprising an optically anisotropic layer, which comprises forming the optically anisotropic layer by a process comprising the following [1] to [3]:
   [1] preparing a substrate having a raw optically anisotropic layer;
   [2] subjecting the raw optically anisotropic layer to patterned exposures of two or more types having different exposure conditions to each other;
   [3] subjecting the substrate obtained after the exposure to a heat treatment at 80°C or higher and 400°C or lower.
2. The process according to the above 1, wherein [1] is conducted by transferring the raw optically anisotropic layer from a transfer material to a substrate.
3. The process according to the above 2, wherein an adhesive layer or a photosensitive, pressure-sensitive, or heat-sensitive polymer layer is provided between the substrate and the raw optically anisotropic layer.
4. The process according to the above 1, wherein the raw optically anisotropic layer is directly formed on the substrate.
5. The process according to the above 1, wherein the raw optically anisotropic layer is directly formed on a rubbed alignment layer which is formed on the substrate.
6. The process according to any one of the above 1 to 5, wherein in-plane retardation of the raw optically anisotropic layer is 40 to 550 nm.
7. The process according to any one of the above 1 to 6, wherein material for forming the optically anisotropic layer comprises polymer.
8. The process according to the above 7, wherein the polymer has at least one polymerizable group selected from the group consisting of acrylic group, methacrylic group, vinyl ether group, oxetanyl group, and epoxy group.
9. The process according to any one of the above 1 to 8, wherein the raw optically anisotropic layer is a layer formed by coating with a solution comprising a liquid crystalline compound having a reactive group, and drying of the solution to thereby form a liquid crystal phase, and then applying heat or irradiating ionized radiation to the liquid crystal phase.
10. The process according to the above 9, wherein the liquid crystalline compound has at least one reactive group for radical polymerization and at least one reactive group for cationic polymerization.
11. The process according to the above 10, wherein the reactive group for radical polymerization is acrylic group or methacrylic group, and the reactive group for cationic polymerization is vinyl ether group, oxetanyl group, or epoxy group.
12. The process according to any one of the above 9 to 11, wherein the liquid crystalline compound is a rod-like liquid crystalline compound.
13. The process according to any one of the above 1 to 8, wherein the raw optically anisotropic layer is a stretched film comprising a compound having at least one reactive group.
14. The process according to the above 13, wherein the stretched film is attached to the substrate with adhesive, directly or via another layer.
15. The process according to any one of the above 1 to 14 wherein the substrate has a color filter layer.
16. A substrate for liquid crystal display device having an optically anisotropic layer having three or more different retardations to each other in a patterned manner, which is produced by the process according to any one of the above 1 to 15.
17. The substrate for liquid crystal display device according to the above 16, which has a color filter and the pattern of the retardation corresponds to color of the color filter.
18. A liquid crystal display device which has the substrate for liquid crystal display device according to the above 16 or 17.
19. The liquid crystal display device according to the above 18, employing a TN, VA, IPS, FFS, or OCB mode as a liquid crystal orientation mode.
20. A process of producing an optically anisotropic layer, which comprises the following [1] and [2]:
   [1] subjecting a material for forming optically anisotropic layer in a film shape to patterned exposures of two or more types having different exposure conditions to each other;
   [2] subjecting the substrate obtained after the exposure to a heat treatment at 80°C or higher and 400°C or lower.

### BRIEF DESCRIPTION OF THE DRAWINGS

Figs. 1 shows outline of preparation of a raw optically anisotropic layer from a transfer material;
Figs. 2 shows outline of the method of the present invention;
Figs. 3 (a) to 3(c) are schematic sectional views showing examples of the substrate for liquid crystal display device;
Figs. 4(a) to 4(c) are schematic sectional views showing examples of the liquid crystal display device.

Reference numerals used in the drawings represents the followings:
11 transfer material
12 substrate for liquid crystal display device before pattern formation;
13 temporary support;
14 substrate;
15 optically anisotropic layer or raw optically anisotropic layer; 16 alignment layer for optically anisotropic layer;
17 adhesive layer for transfer;
18 dynamic property control layer;
19 substrate for liquid crystal display device;
15A domain formed under exposure condition A in optically anisotropic layer;
15B domain formed under exposure condition B in optically anisotropic layer;
15C a domain formed under exposure condition C in optically anisotropic layer
21 color filter layer;
21R red color filter layer;
21G green color filter layer;
21B blue color filter layer;
15r pattern of optically anisotropic layer corresponding to red;
15g pattern of optically anisotropic layer corresponding to green;
15b pattern of optically anisotropic layer corresponding to blue;
22 black matrix;
31 transparent electrode layer;
32 alignment layer for liquid crystal layer;
33 liquid crystal layer;
34 TFT array;
35 liquid crystal cell;
36 polarizing layer;
37 protective film;
38 polarizing plate.

### DETAILED DESCRIPTION OF THE INVENTION

Paragraphs below will detail the present invention.

In the specification, ranges indicated with "to" mean ranges including the numerical values before and after "to" as the minimum and maximum values.

In the specification, retardation or Re represents in-plane retardation. The in-plane retardation Re at the wavelength of λnm is measured by means of KOBRA 21ADH or WR manufactured by Oj i Scientific Instruments while applying a λnm wavelength light in the normal line direction of the film. In the specification, λ is 611±5 nm, 545±5 nm and 435±5 nm for R, G and B, respectively, and denotes 545±5 nm or 590±5 nm if no specific description is made on color.

It is to be noted that, regarding angles, the term "substantially" in the context of this specification means that a tolerance of less than ±5° with respect to the precise angles can be allowed. Difference from the precise angles is preferably less than 4°, and more preferably less than 3°. It is also to be noted that, regarding retardation values, the term "substantially" in the context of the specification means that a tolerance of less than ±5% with respect to the precise values can be allowed. It is also to be noted that the term "The Re value is substantially not zero" in the context of the specification means that the Re value is not less than 5 nm. The measurement wavelength for refractive indexes is a visible light wavelength, unless otherwise noted. It is also to be noted that the term "visible light" in the context of the specification means light of a wavelength falling within the range from 400 to 700 nm.

The substrate for liquid crystal display device obtained by the process of the present invention is a substrate for liquid crystal display device having patterned retardation, and has a substrate and at least one optically anisotropic layer having patterned retardation. In the specification, "optically anisotropic layer having patterned retardation" or "optically anisotropic layer having retardation in a patterned manner" means "optically anisotropic layer having domains having different retardation to each other in a patterned manner". In the specification, each of "substrate for liquid crystal display device" and "substrate" is generally used in distinct meaning, unless otherwise noted.

### [Transfer Material and Substrate for Liquid Crystal Display Device before Pattern Formation]

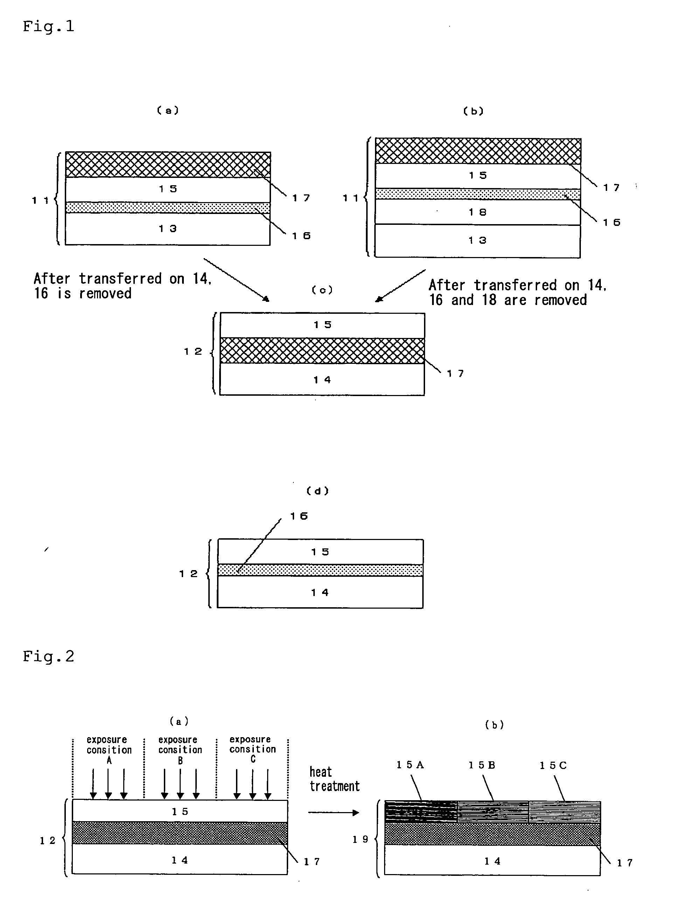

Fig. 1(d) is a schematic sectional view showing substrate for liquid crystal display device before pattern formation. In the substrate for liquid crystal display device of Figs. 1(d), optically anisotropic layer 15 is formed on substrate 14 via alignment layer 16.

Fig. 1(c) is schematic sectional view showing substrate for liquid crystal display device before pattern formation, which is formed by using a transfer material. Figs. 1(a) and (b) are schematic sectional views showing examples of transfer material used when raw optically anisotropic layer is formed by transfer from a transfer material on a substrate. The transfer material 11 of Fig. 1 (a) has raw optically anisotropic layer 15 and adhesive layer for transfer 17 formed on a temporary support 13 in this order via alignment layer 16. By transferring transfer material 11 on substrate 14 via adhesive layer for transfer 17, substrate for liquid crystal display device before pattern formation 12 of Fig. 1(c) can be prepared. The substrate 14 is not specifically limited so far as it is transparent, but is preferably a support having a small birefringence. A support comprising glass, small-birefringent polymer, or the like can be used.

As adhesive layer for transfer 17 is not particularly limited as far as the layer has sufficient property for transfer. Examples of the adhesive layer for transfer include an adhesive layer using an adhesive agent, a photosensitive polymer layer, a pressure-sensitive polymer layer, and a heat-sensitive polymer layer. Among these, the heat-sensitive polymer layer and the photosensitive polymer layer are preferred when heat-resistance is required for the adhesive layer for transfer. The example of Fig. 1(b) is a transfer material having dynamic property control layer 18 formed between temporary support 13 and alignment layer 16. For the purpose of a suitable property for transfer, raw optically anisotropic layer 15 and alignment layer 16 is preferred to be separated each other easily. Dynamic property control layer 18 is preferred to be provided in order to prevent a contamination of air bubbles in the transfer steps and absorb irregularity on the substrate for liquid crystal display device. The dynamic property control layer preferably exhibit flexible elasticity, is softened by heat, or fluidize by heat. The alignment layer 16 in Fig. 1(a) and the alignment layer 16 and dynamic property control layer 18 in Fig. 1 (b) as well as temporary support 13 which is removed after transfer are generally unnecessary in a substrate for liquid crystal display device. Removal of these layers is needed, when these layers are deteriorated by heat or light and consequently have influence on optical property. Liquid treatment is generally preferred and treatment with weak alkaline solution is more preferred. It is also preferred that the unnecessary layers such as alignment layer 16 are adhered to the temporary support upon delamination of the temporary support, so that the step of liquid treatment can be eliminated.

### [Substrate for Liquid Crystal Display Device Having Optically Anisotropic Layer Having Retardation in Patterned Manner]

Substrate for liquid crystal display device obtained by the process of the present invention has at least one patterned optically anisotropic layer having two or more different retardations in a patterned manner. Fig. 2 shows outline of an example of the process of producing a substrate for liquid crystal display device having a patterned optically anisotropic layer. As shown in Fig. 2(a), substrate for liquid crystal display device before pattern formation 12 is subjected to exposures of three types of exposure conditions A, B and C, and subsequently a heat treatment. As the result, there formed a patterned optically anisotropic substrate 19 having domains 15A, 15B, and 15C, corresponding to the above exposure conditions A, B, and C, respectively, as shown in Fig. 2 (b). Each of the domains can have substantially different retardations as ReA, ReB, or ReC. As the exposure condition, different conditions can be designed by changing the exposure energy or the like as described below. Three or more patterned exposures may include one no-exposure as one of the exposure conditions. In the specification, a patterned exposure means an exposure to a domain of certain part of the layer. For example, "a raw optically anisotropic layer is subjected to a patterned exposure" means that a domain of the raw optically anisotropic layer is subjected to an exposure. The domain may be a part of the layer divided by surfaces parallel to the direction of normal line of the layer. Each domain may be a continuous shape or discontinuous shape.

As the method of the patterned exposure, either of direct exposure with a commercial laser pattern exposure system or the like and exposure through a photomask may be used. The patterned optically anisotropic layer thus obtained may contribute to optical compensation of the cell of the liquid crystal display device, that is, contribute to widening the viewing angle, ensuring desirable contrast and cancellation of coloration of image on the liquid crystal display device. The process of the present invention is suitable for producing a substrate for liquid crystal display device which is a component of a liquid crystal display device. However, the process of the present invention can be applied for producing a product having an optically anisotropic layer other than producing a substrate for liquid crystal display device.

### [Substrate for Liquid Crystal Display Device Having Color Filter Layer]

An optically anisotropic layer having necessary retardation in a patterned manner can be prepared by optimizing the above exposure condition. With a substrate for liquid crystal display device having such an optically anisotropic layer, different optical compensation to color filter of each color in the liquid crystal cell can be achieved.

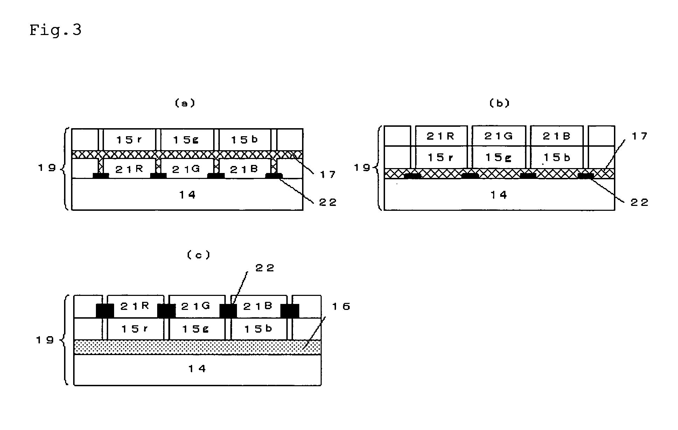

Figs. 3(a), (b), and (c) are schematic sectional views showing examples of the substrate for liquid crystal display device obtained by the process of the present invention. In Fig. 3(a), substrate for liquid crystal display device 19 has black matrix 22, color filter layer 21, adhesive layer for transfer 17, and patterned optically anisotropic layer 15 in this order, which are formed on substrate 14. Color filter layer 21 may have patterns of at least 21R of red, 21G of green, and 21B of blue. Color filter layer 21 may further have white pattern (W) . Patterned optically anisotropic layer 15 may have patterns of 15r, 15g, and 15b, each having suitable retardation for 21R, 21G, and 21B, respectively. When the color filter layer has a pattern corresponding to 21W, the patterned optically anisotropic layer may have a pattern of 15w having suitable retardation for 21W at position corresponding to 21W. By patterning of the optically anisotropic layer in accordance with each color of the color filter layer, suitable optical compensation can be achieved and viewing angle can be improved in the liquid crystal display device, compared to when an optically anisotropic layer not having patterned retardation is used in the liquid crystal display device. Fig. 3(b) is an example of a substrate for liquid crystal display device wherein the color filter layer and the patterned optically anisotropic layer is formed in the reverse order. Fig. 3(c) is an example of a substrate for liquid crystal display device which can be prepared in a similar manner by using substrate for liquid crystal display device before pattern formation 12 of Fig. 1(d).

The substrate for liquid crystal display device produced by the process of the present invention can be used for either of the two substrates for liquid crystal display device forming liquid crystal cell. However, as the step for forming a TFT array needs a process of high-temperature higher than 300 °C for silicon formation, the substrate for liquid crystal display device produced by the process of the present invention is preferably used in the opposing side of the substrate for liquid crystal display device having TFT layer. When the substrate for liquid crystal display device produced by the process of the present invention is used as a substrate for liquid crystal display device having TFT layer, an optically anisotropic layer is preferably formed in an upper layer of the silicon layer, by using a substrate having a TFT layer formed thereon as "a substrate" in the process of the present invention.

With the substrate for liquid crystal display device produced by the process of the present invention, an optically anisotropic layer can be provided in a liquid crystal cell. As a result, the optically anisotropic layer is tightly held by a substrate such as glass substrate, and the cell becomes more resistant to corner non-uniformities compared to a liquid crystal cell with an optically anisotropic film susceptible to dimensional changes attached thereon.

### [Liquid Crystal Display Device]

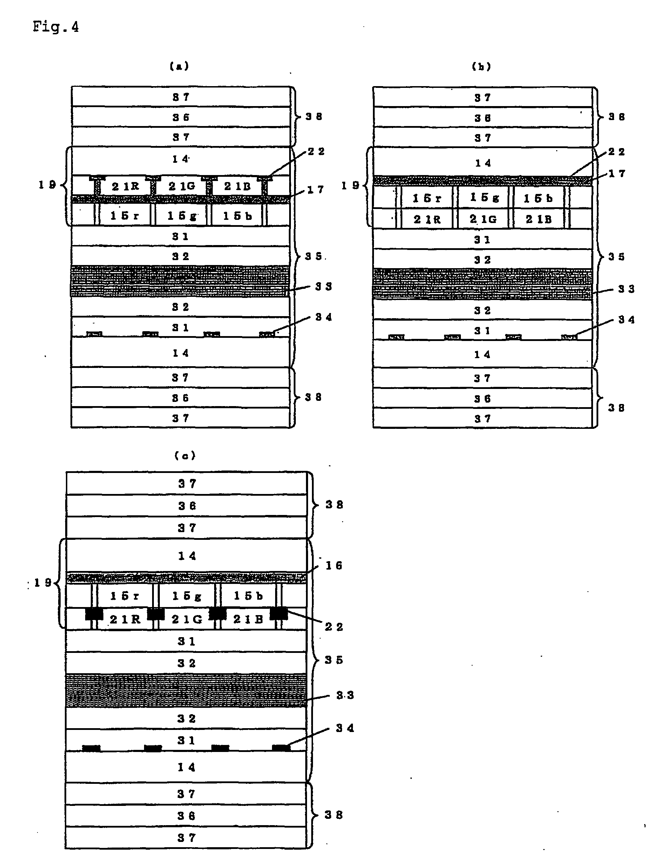

Figs. 4(a), (b), and (c) are schematic sectional views showing examples of the liquid crystal display device produced by the process of the present invention. Figs. 4 (a), (b), and (c) exemplify the liquid crystal display devices using the substrate for liquid crystal display device shown in Figs. 3(a), (b), and (c) at the side of display, respectively: a liquid crystal display devices which have liquid crystal cell 35 holding liquid crystal layer 33 between substrate for liquid crystal display device 19 having color filter and patterned optically anisotropic layer and a substrate for liquid crystal display device having TFT34 as the opposing substrates, between which transparent electrode layer 31 and alignment layer 32 are formed beforehand. On each side of liquid crystal cell 35, polarizing plate 38, which is formed of polarizing layer 36 sandwiched by two protective films 37 such as cellulose acetate films, is attached with adhesive. By changing voltage applied to the upper and lower transparent electrode layers, orientational state of liquid crystal layer is changed and the liquid crystal display device is switched on and off. Alignment layer 32 is generally subjected to rubbing treatment to control the orientation of liquid crystal molecules in liquid crystal layer 33. Among two protective films 37 sandwiching the polarizer plate, the protective film at the side of liquid crystal cell may be an optical compensation sheet. Flexible liquid crystal cell design can be achieved by further employing multi gap system, wherein cell gap of liquid crystal layer 33 differs between RGB. This system is preferable in that excellent viewing angle characteristics can be achieved particularly in VA-mode and IPS-mode.

Paragraphs below will detail the process of the present invention with respect to materials and processes. It is to be noted that the present invention is by no means limited to the embodiments below, and any other embodiments can be carried out referring to the description below and known methods, so that the present invention is not limited to the embodiment explained below.

### [Substrate]

The substrate used for the process of producing the liquid crystal display device of the present invention is not particularly limited as long as it is transparent. The substrate may be any of known glasses such as soda glass sheet having a silicon oxide film formed on the surface thereof, low-expansion glass and non-alkali glass; or a transparent substrate formed of polymer. In the substrate for liquid crystal display device, the substrate is preferred to have heat-resistance, because production of the substrate for liquid crystal display device includes processes at high-temperature more than 180°C for baking of color filter or alignment layer. As such substrate having heat-resistance, glass sheet, polyimide, polyether sulfone, heat-resisting polycarbonate, or polyethylene naphthalate is preferred. Glass sheet is particularly preferred in from the viewpoint of price, transparency, and heat-resistance. The substrate can be improved in the adhesiveness with the adhesive layer for transfer by being preliminarily subjected to a coupling treatment. The coupling treatment is preferably carried out by using the method described in Japanese Laid-Open Patent Publication "Tokkai" No. 2000-39033. The thickness of the substrate is preferably 100 to 1200*µ*m in general, most preferably 300 to 1000 *µ*m, although being not specifically limited.

The substrate which is used for the process of the present invention may be a substrate having a color filter layer or the like on the above substrate.

### [Color Filter Layer]

The color filter layer is not particularly limited. A commercial color filter may be used, or a color filter produced by any conventionally known method may be used. The color filter may be prepared by the process described in Japanese Laid-Open Patent Publication "Tokkaihei" No. 11-248921, or Japanese Patent No.3255107 by using a composition for forming a colored photosensitive polymer layer obtained by adding the following colorant to the after-mentioned composition for forming a photosensitive polymer layer.

### (4)Colorant

The polymer composition may be added with any of known colorants (dyes, pigments). The pigment is desirably selected from known pigments capable of uniformly dispersing in the polymer composition, and that the grain size is adjusted to 0.1 *µ*m or smaller, and in particular 0.08 *µ*m or smaller.

The known dyes and pigments can be exemplified by pigments and so forth described in paragraph [0033] in Japanese Laid-Open Patent Publication "Tokkai" No. 2004-302015 and in column 14 of United States Patent No. 6,790,568.

Of the above-described colorants, those preferably used in the present invention include (i) C.I.Pigment Red 254 for the colored polymer composition for R(red), (ii) C.I.Pigment Green 36 for the colored polymer composition for G(green), and (iii) C.I.Pigment Blue 15:6 for the colored polymer composition for B(blue). The above-described pigments may be used in combination.

Preferable examples of combination of the above-described pigments include combinations of C.I.Pigment Red 254 with C.I.Pigment Red 177, C.I.Pigment Red 224, C.I.Pigment Yellow 139 or with C. I. Pigment Violet 23; combinations of C.I. Pigment Green 36 with C.I.Pigment Yellow 150, C.I.Pigment Yellow 139, C. I. Pigment Yellow 185, C. I. Pigment Yellow 138 or with C.I.Pigment Yellow 180; and combinations of C.I.Pigment Blue 15:6 with C.I.Pigment Violet 23 or with C.I.Pigment Blue 60.

Contents of C.I.Pigment Red 254, C.I.Pigment Green 36 and C. I. Pigment Blue 15: 6 in the combined pigments are preferably 80% by weight or more, and particularly preferably 90% by weight or more for C.I.Pigment Red 254; preferably 50% by weight or more, and particularly preferably 60% by weight or more for C.I. Pigment Green 36; and preferably 80% by weight or more, and particularly preferably 90% by weight or more for C.I.Pigment Blue 15:6.

The pigments are preferably used in a form of dispersion liquid. The dispersion liquid may be prepared by adding a composition, preliminarily prepared by mixing the pigment and a pigment dispersant, to an organic solvent (or vehicle) described later for dispersion. The vehicle herein refers to a portion of medium allowing the pigments to disperse therein when the coating material is in a liquid state, and includes a liquidous portion (binder) binding with the pigment to thereby solidify a coated layer and a component (organic solvent) dissolving and diluting the liquidous portion. There is no special limitation on dispersion machine used for dispersing the pigment, and any known dispersers described in "Ganryo no Jiten (A Cyclopedia of Pigments)", First Edition, written by Kunizo Asakura, published by Asakura Shoten, 2000, p.438, such as kneader, roll mill, attritor, super mill, dissolver, homomixer, sand mill and the like, are applicable. It is also allowable to finely grind the pigment based on frictional force, making use of mechanical grinding described on p.310 of the same literature.

The colorant (pigment) used in the present invention preferably has a number-averaged grain size of 0.001 to 0.1 µ m, and more preferably 0.01 to 0.08 µ m. A number-averaged grain size of less than 0.001 µ m makes the pigment more likely to coagulate due to increased surface energy, makes the dispersion difficult, and also makes it difficult to keep the dispersion state stable. A number-averaged grain size exceeding 0.1 µm undesirably causes pigment-induced canceling of polarization, and degrades the contrast. It is to be noted that the "grain size" herein means the diameter of a circle having an area equivalent to that of the grain observed under an electron microscope, and that the "number-averaged grain size" means an average value of such grain sizes obtained from 100 grains.

In fabrication of the color filter, it is preferable for the purpose of reducing cost to form a base by stacking the colored polymer composition for forming the color filter, to form the transparent electrode thereon, and to form, if necessary, spacers by stacking thereon projections for divisional orientation, as described in Japanese Laid-Open Patent Publication "Tokkaihei" No. 11-248921, or Japanese Patent No.3255107.

### [Temporary Support]

When a rare optically anisotropic layer is formed by a transfer from a transfer material on a substrate, the transfer material may have a temporary support. The temporary support is not particularly limited and may be transparent or opaque. Polymer films may be used as a support. Examples of the polymer film, which can be used as a temporary support, however not limited to them, include cellulose ester films such as cellulose acetate films, cellulose propionate films, cellulose butyrate films, cellulose acetate propionate films and cellulose acetate butyrate films; polyolefin films such as norbornene based polymer films, poly(meth)acrylate films such as polymethylmethacrylate films, polycarbonate films, polyester films and polysulfone films. For the purpose of property examination in a manufacturing process, the support is preferably selected from transparent and low-birefringence polymer films. Examples of the low-birefringence polymer films include cellulose ester films and norbornene based polymer films. Commercially available polymers (for example, as a norbornene based polymer, "ARTON" provided by JSR and "ZEONEX" and "ZEONOR" provided by ZEON CORPORATION) may be used. Polycarbonate, poly(ethylene terephthalate), or the like which is inexpensive, may also be preferably used.

### [Optically Anisotropic Layer]

The optically anisotropic layer is not specifically limited so far as the layer gives a retardation, which is not substantially zero, for a light incoming in at least one direction, that is, the layer has an optical characteristic not understood as being isotropic. In the process of the present invention, an optical anisotropic layer having two or more domains having a different Re to each other can be formed from a rare optical anisotropic layer by conducting specific steps.

The optically anisotropic layer functions as an optically anisotropic layer compensating the viewing angle of a liquid crystal display device, by being incorporated into the liquid crystal cell as described above. Not only an embodiment in which the optically anisotropic layer can independently exhibit a sufficient level of optical compensation property, but also an embodiment in which an optical characteristic necessary for the optical compensation is satisfied after being combined with other layer (for example, optically anisotropic layer disposed outside the liquid crystal cell) are within the scope of the present invention. The optically anisotropic layer before the patterned exposure does not necessarily have an optical characteristic sufficient for satisfying the optical compensation property. Alternatively, the layer may exhibit an optical characteristic necessary for the optical compensation as a result, for example, of the exposure step which generates or changes the optical characteristics of the layer.

### [Optically Anisotropic Layer before Patterned Exposure]

The optically anisotropic layer before the exposure in the process of the present invention may be optically anisotropic or non-anisotropic, and may be referred to as "rare optical anisotropic layer" in the specification. Re of the rare optical anisotropic layer is preferably 40 to 550 nm.

### [Material for Forming Optically Anisotropic Layer]

Material for forming the optically anisotropic layer is not particularly limited, as long as it can form a layer of film shape by coating, stretching, or the like, and can give different Re by an exposure of different condition.

An example of the material for forming the optically anisotropic layer is a material containing a polymer. The polymer preferably has at least one polymerizable group selected from the group consisting of acrylic group, methacrylic group, vinyl ether group, oxetanyl group, and epoxy group. For example, a rare optical anisotropic layer may be a stretched film containing a compound having at least one reactive group. The stretched film may be used by being attached to a substrate directly or via other layer with an adhesive.

A preferable example of the material for forming the optically anisotropic layer is a material containing a liquid crystalline compound. Particularly, the rare optical anisotropic layer is preferably formed by coating with a solution comprising a liquid crystalline compound, conducting maturing and alignment at a temperature forming a liquid crystal phase, and then applying heat or irradiating ionized radiation to the liquid crystal phase to achieve fixation. The following paragraphs will explain this embodiment in detail.

### [Liquid Crystalline Compound]

The liquid-crystalline compounds can generally be classified by molecular geometry into rod-like one and discotic one. Each category further includes low-molecular type and high-molecular type. The high-molecular type generally refers to that having a degree of polymerization of 100 or above ("Kobunshi Butsuri-Soten'i Dainamikusu (Polymer Physics-Phase Transition Dynamics), by Masao Doi, p.2, published by Iwanami Shoten, Publishers, 1992). Either type of the liquid-crystalline molecule may be used in the present invention, wherein it is preferable to use a rod-like liquid-crystalline compound or a discotic liquid-crystalline compound. A mixture of two or more rod-like liquid-crystalline compound, a mixture of two or more discotic liquid-crystalline compound, or a mixture of a rod-like liquid-crystalline compound and a discotic liquid-crystalline compound may also be used. It is more preferable that the optically anisotropic layer is formed using a composition comprising the rod-like liquid-crystalline compound or the discotic liquid-crystalline compound, having a reactive group, because such compound can reduce temperature- and moisture-dependent changes, and it is still further preferable that at least one compound in the mixture has two or more reactive group in a single liquid-crystalline molecule. The liquid-crystalline composition may be a mixture of two or more compounds, wherein at least one of the compounds preferably has two or more reactive groups. The thickness of the optically anisotropic layer is preferably 0.1 to 20 µ m, and more preferably 0.5 to 10 µ m.

Examples of the rod-like liquid-crystalline compound include azomethine compounds, azoxy compounds, cyanobiphenyl compounds, cyanophenyl esters, benzoate esters, cyclohexanecarboxylic acid phenyl esters, cyanophenylcyclohexane compounds, cyano-substituted phenylpyrimidine compounds, alkoxy-substituted phenylpyrimidine compounds, phenyldioxane compounds, tolan compounds and alkenylcyclohexylbenzonitrile compounds. Not only the low-molecular-weight, liquid-crystalline compound as listed in the above, high-molecular-weight, liquid-crystalline compound may also be used. High-molecular-weight liquid-crystalline compounds may be obtained by polymerizing low-molecular-weight liquid-crystalline compounds having at least one reactive group. Among such low-molecular-weight liquid-crystalline compounds, liquid-crystalline compounds represented by a formula (I) are preferred.

Formula (I) : Q¹-L¹-A¹-L³-M-L⁴ -A²-L²-Q²

In the formula, Q¹ and Q² respectively represent a reactive group. L¹, L², L³ and L⁴ respectively represent a single bond or a divalent linking group, and it is preferred that at least one of L³ and L⁴ represents -O-CO-O-. A¹ and A² respectively represent a C₂₋₂₀ spacer group. M represents a mesogen group.

The rod-like liquid-crystalline compound represented by the above formula (I) having reactive groups will be further explained in detail as below. In formula (I), Q¹ and Q² respectively represent a reactive group. The polymerization reaction of the reactive group is preferably addition polymerization (including ring opening polymerization) or condensation polymerization. In other words, the reactive group is preferably a functional group capable of addition polymerization reaction or condensation polymerization reaction. Further, the liquid crystalline compound preferably has at least one reactive group for radical polymerization such as acrylic group or methacrylic group and at least one reactive group for cationic polymerization such as vinyl ether group, oxetanyl group, or epoxy group. Examples of reactive groups are shown below.

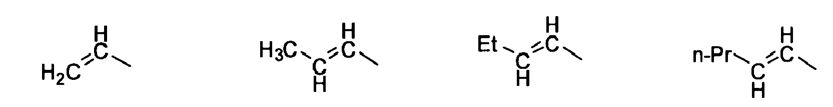

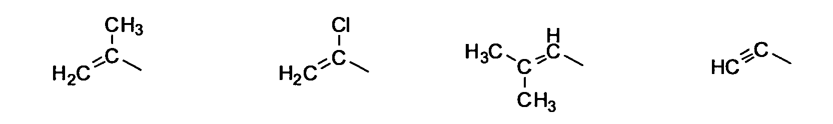

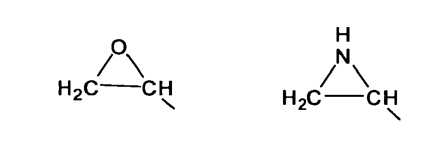

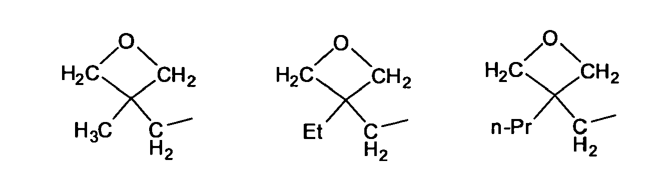

-SH -OH -NH₂

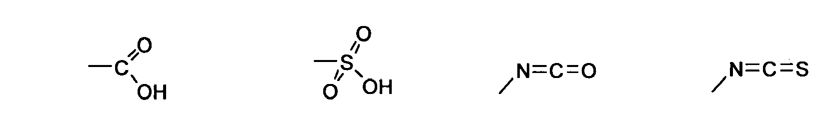

As the divalent linking group represented by L¹, L², L³ or L⁴, a divalent linking group selected from the group consisting of -O-, -S-, -CO-, -NR²-, -CO-O-, -O-CO-O-, -CO-NR²-, -NR²-CO-, -O-CO-, -O-CO-NR²-, -NR²-CO-O- and -NR²-CO-NR²- is preferred. R¹² represents a C₁₋₇ alkyl group or hydrogen atom. It is preferred that Q¹-L¹ and Q²-L²- are respectively CH₂=CH-CO-O-, CH₂=C(CH₃) -CO-O- or CH₂=C (Cl) -CO-O-CO-O-; and it is more preferred they are respectively CH₂=CH-CO-O-.

In the formula, A¹ and A² preferably represent a C₂₋₂₀ spacer group. It is more preferred that they respectively represent C₂₋₁₂ aliphatic group, and much more preferred that they respectively represent a C₂₋₁₂ alkylene group. The spacer group is preferably selected from chain groups and may contain at least one unadjacent oxygen or sulfur atom. And the spacer group may have at least one substituent such as a halogen atom (fluorine, chlorine or bromine atom), cyano, methyl and ethyl.

Examples of the mesogen represented by M include any known mesogen groups. The mesogen groups represented by a formula (II) are preferred.

Formula (II): -(-W¹-L⁵) ₙ-W²-

In the formula, W¹ and W² respectively represent a divalent cyclic aliphatic group or a divalent hetero-cyclic group; and L⁵ represents a single bond or a linking group. Examples of the linking group represented by L⁵ include those exemplified as examples of L¹ to L⁴ in the formula (I) and -CH₂-O- and -O-CH₂-. In the formula, n is 1, 2 or 3.

Examples of W¹ and W² include 1,4-cyclohexanediyl, 1,4-phenylene, pyrimidine-2,5-diyl, pyridine-2,5-diyl, 1,3,4-thiazole-2,5-diyl, 1,3,4-oxadiazole-2,5-diyl, naphtalene-2,6-diyl, naphtalene-1,5-diyl, thiophen-2,5-diyl, pyridazine-3,6-diyl. 1,4-cyclohexanediyl has two stereoisomers, cis-trans isomers, and the trans isomer is preferred. W¹ and W² may respectively have at least one substituent. Examples the substituent include a halogen atom such as a fluorine, chlorine, bromine or iodine atom; cyano; a C₁₋₁₀ alkyl group such as methyl, ethyl and propyl; a C₁₋₁₀ alkoxy group such as methoxy and ethoxy; a C₁₋₁₀ acyl group such as formyl and acetyl; a C₂₋₁₀ alkoxycarbonyl group such as methoxy carbonyl and ethoxy carbonyl; a C₂₋₁₀ acyloxy group such as acetyloxy and propionyloxy; nitro, trifluoromethyl and difluoromethyl.

Preferred examples of the basic skeleton of the mesogen group represented by the formula (II) include, but not to be limited to, these described below. And the examples may have at least one substituent selected from the above.

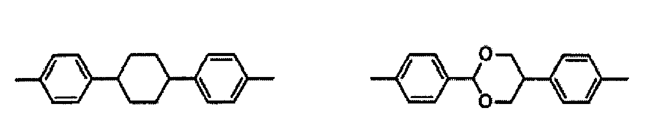

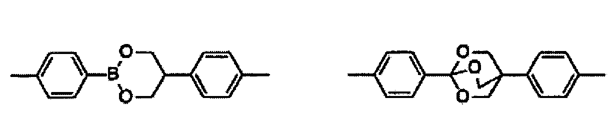

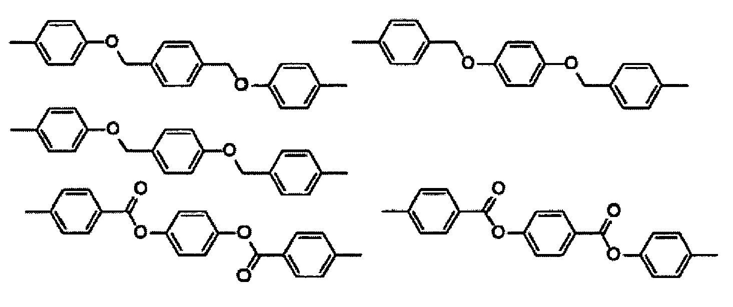

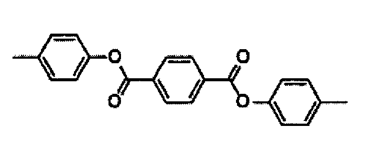

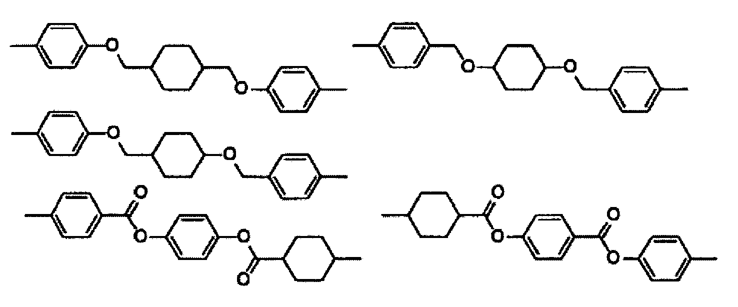

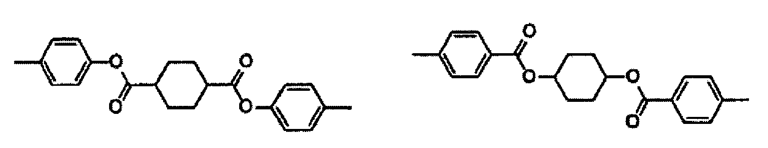

Examples the compound represented by the formula (I) include, but not to be limited to, these described below. The compounds represented by the formula (I) may be prepared according to a method described in a gazette of Tokkohyo No. hei 11-513019.

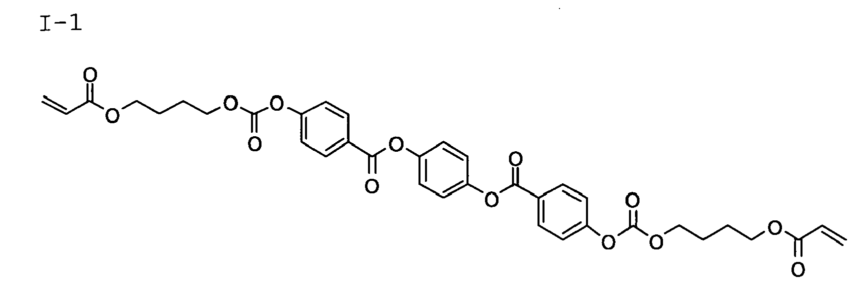

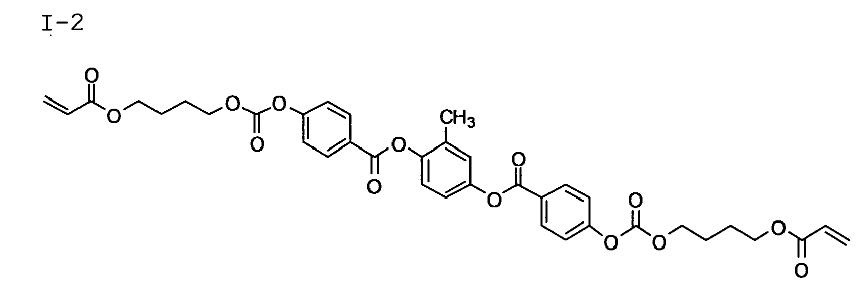

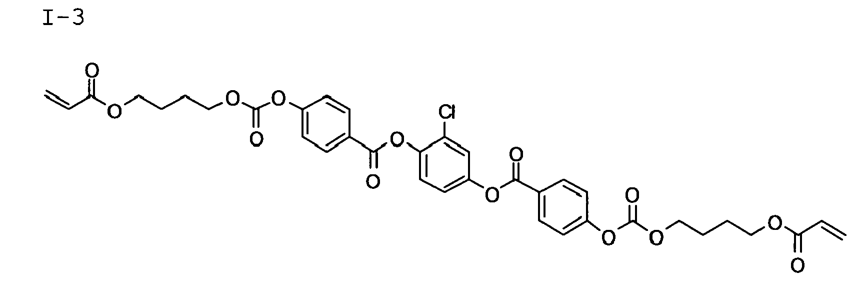

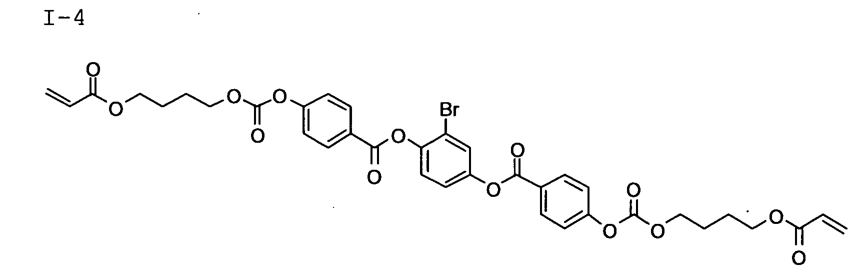

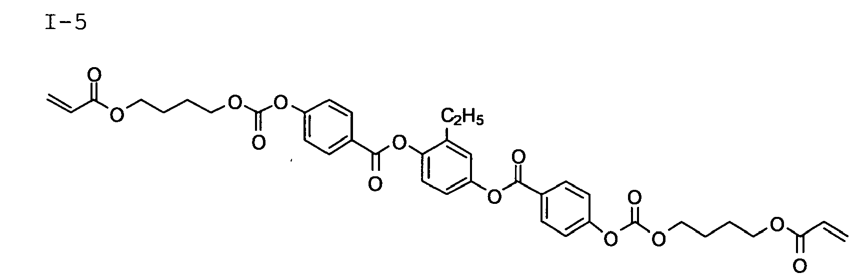

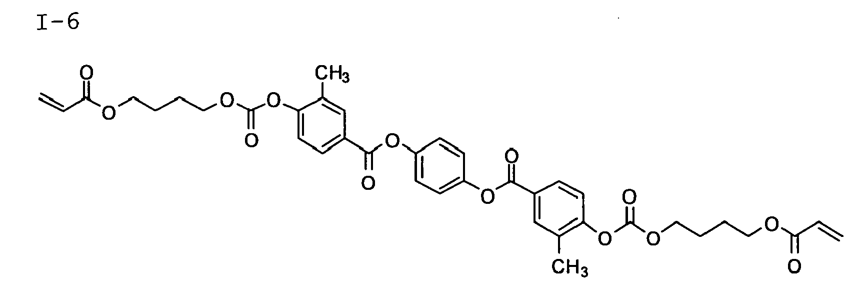

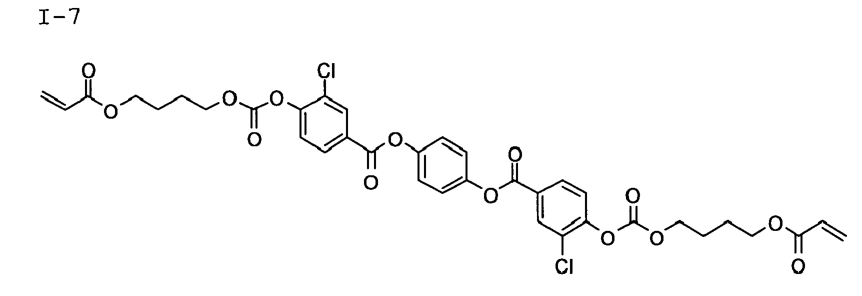

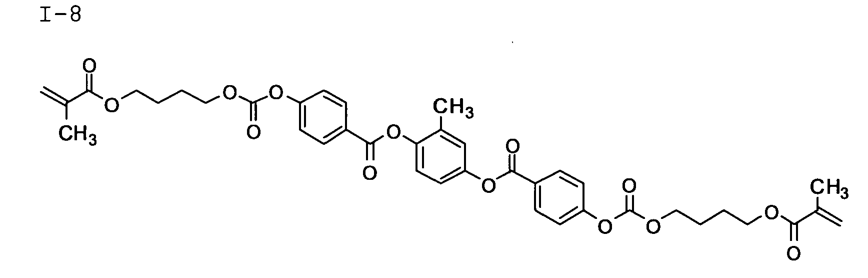

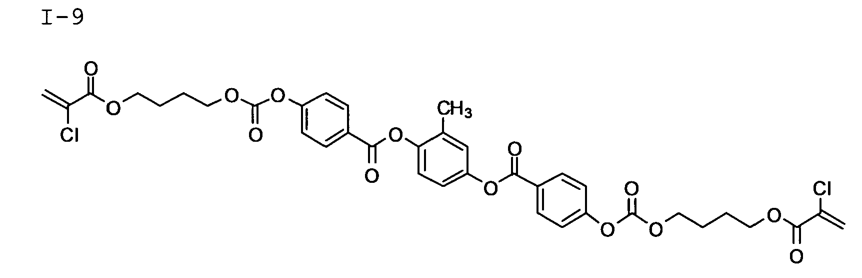

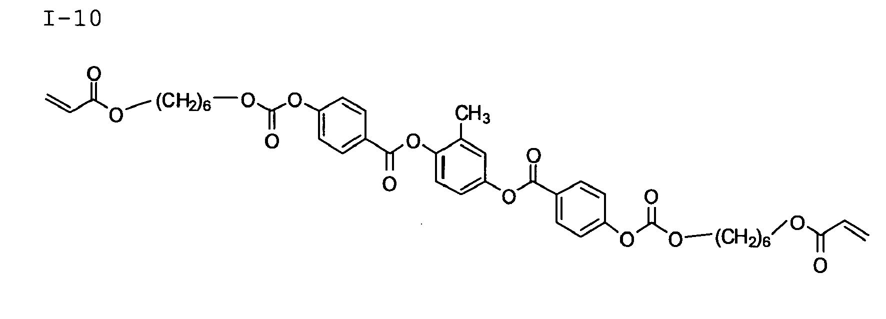

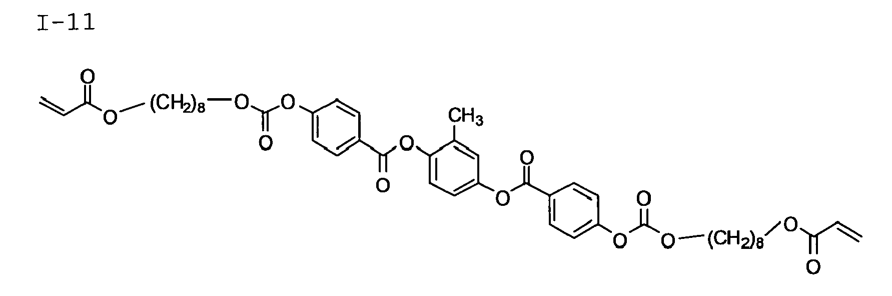

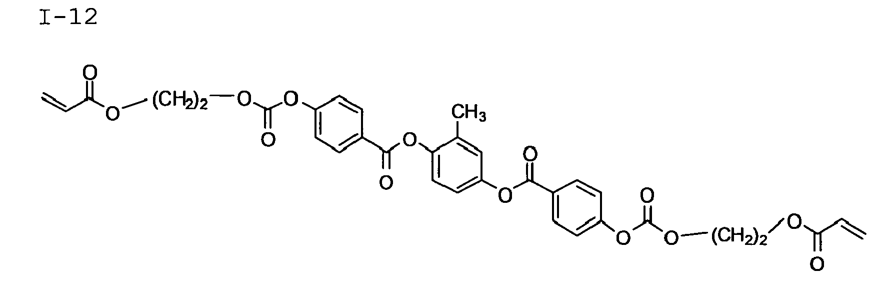

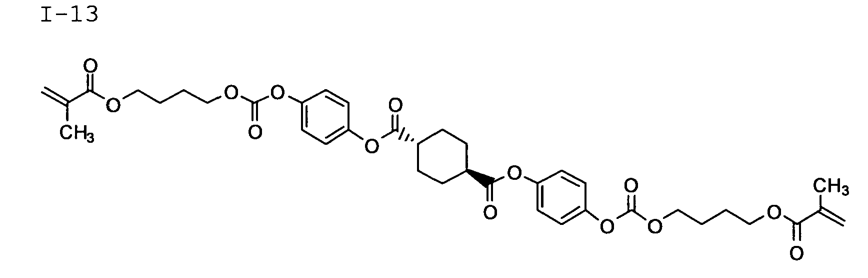

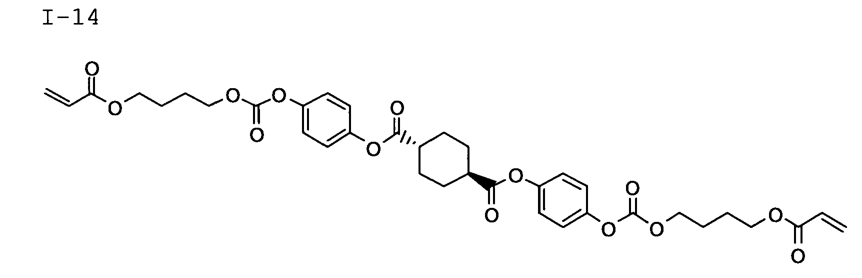

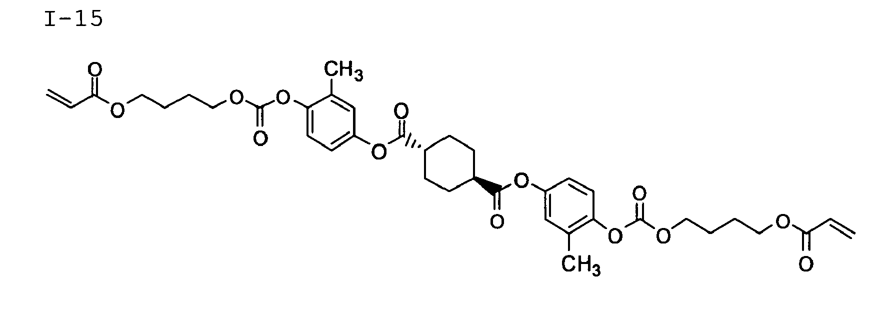

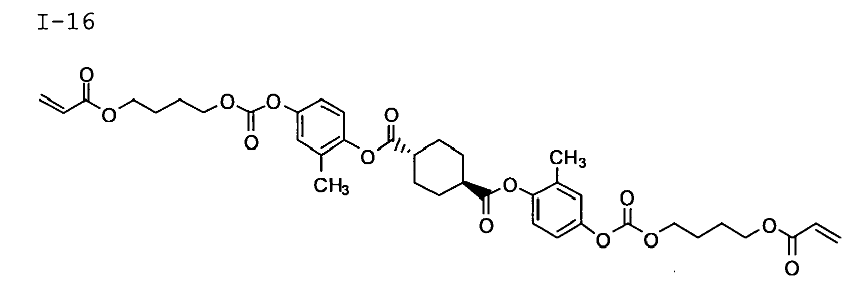

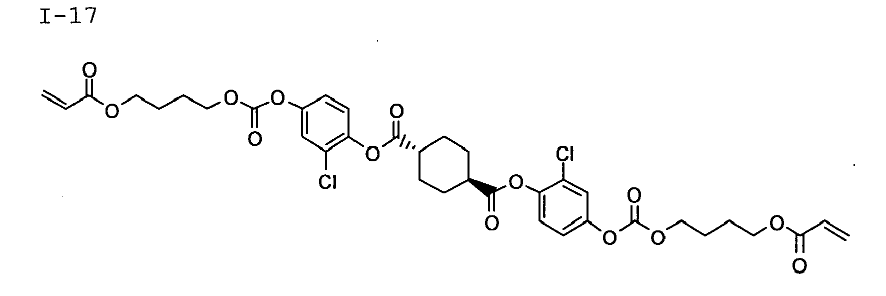

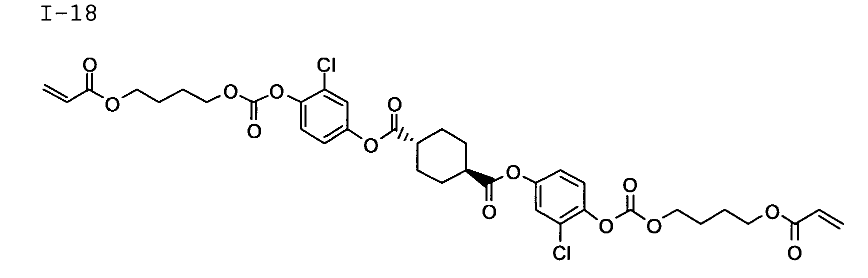

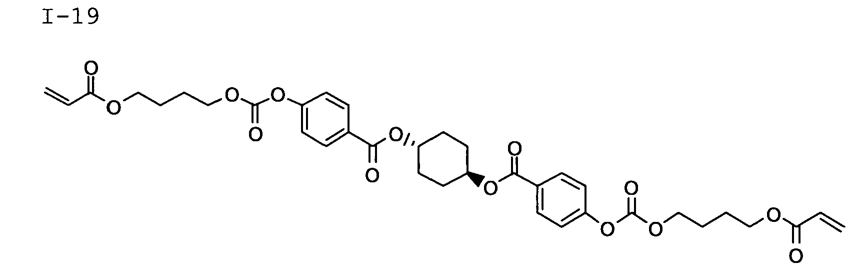

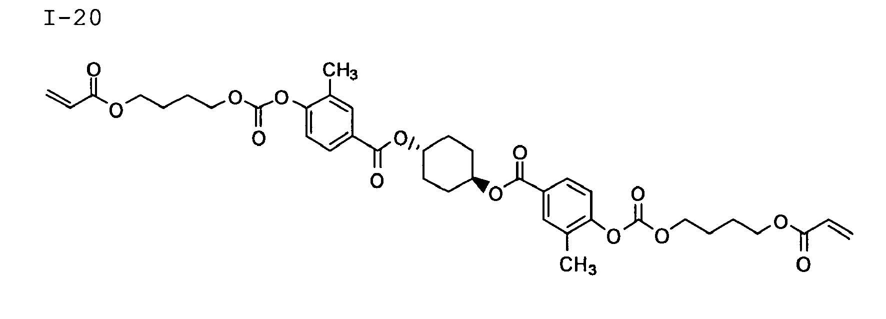

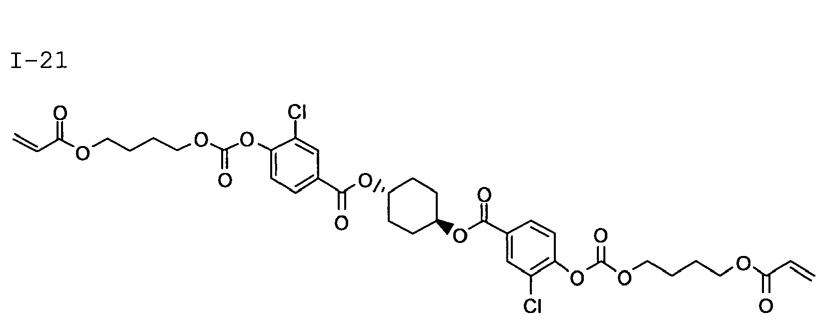

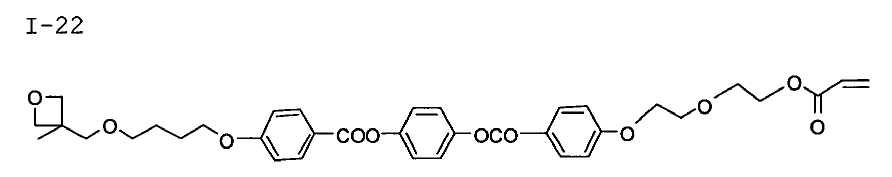

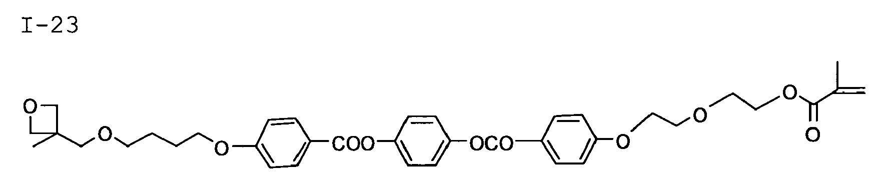

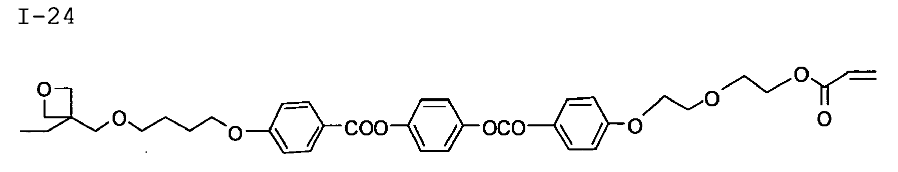

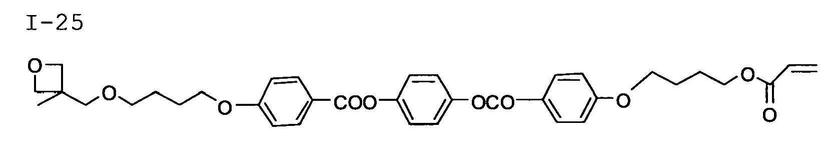

The liquid-crystalline compound may be a discotic liquid-crystalline compound. Examples of the discotic liquid-crystalline compound, which can be used in the first embodiment, are described in various documents, and include benzene derivatives described in C. Destrade et al., Mol. Cryst., Vol. 171, p.111 (1981); torxene derivatives described in C. Destrade et al., Mol. Cryst., Vol. 122, p.141 (1985) and Physics Lett., A, Vol. 78, p.82 (1990); cyclohexane derivatives described in B. Kohne et al., Angew. Chem., Vol. 96, p.70 (1984); and azacrown-base or phenylacetylene-base macrocycles described in J. M. Lehn, J. Chem. Commun., p.1794 (1985) and in J. Zhang et al., J. Am. Chem. Soc., Vol. 116, p.2655 (1994). The above mentioned discotic (disk-like) compounds generally have a discotic core in a central portion and groups (L), such as linear alkyl or alkoxy groups or substituted banzoyloxy groups, which radiate from the core. Among them, there are compounds exhibiting liquid crystallinity, and such compounds are generally called as discotic liquid crystal. When such molecules are aligned uniformly, the aggregate of the aligned molecules may exhibit an optically negative uniaxial property, although any limitation is intended.

In the specification, the term of "formed of a discotic compound" is used not only when finally comprising the discotic compound as a low-molecular weight compound, but also when finally comprising a high-molecular weight discotic compound, no longer exhibiting liquid crystallinity, formed by carrying out polymerization reaction or crosslinking reaction of the low-molecular weight discotic compound having at least one reactive group capable of thermal reaction or photo reaction under heating or under irradiation of light.

According to the present invention, it is preferred that the discotic liquid-crystalline compound is selected from the formula (III) below:

Formula (III) : D(-L-P)ₙ

In the formula, D represents a discotic core, L represents a divalent linking group, P represents a polymerizable group, and n is an integer from 4 to 12.

Preferred examples of the discotic core (D), the divalent linking group (L) and the polymerizable group (P) are respectively (D1) to (D15), (L1) to (L25) and (P1) to (P18) described in Japanese Laid-Open Patent Publication (Tokkai) No. 2001-4837; and the descriptions in the publication regarding the discotic core (D), the divalent linking group (L) and the polymerizable group (P) may be preferably applicable to this embodiment.

Preferred examples of the discotic compound are shown below.

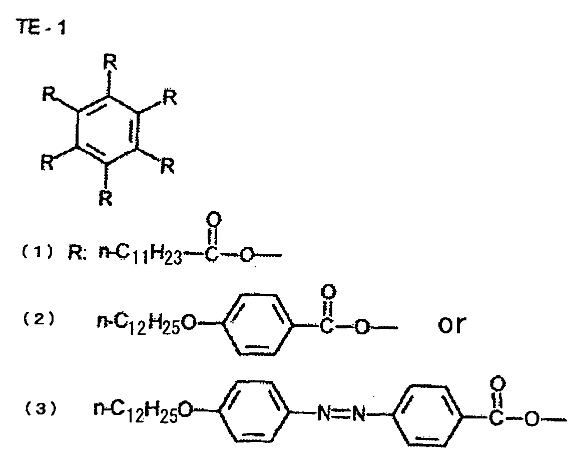

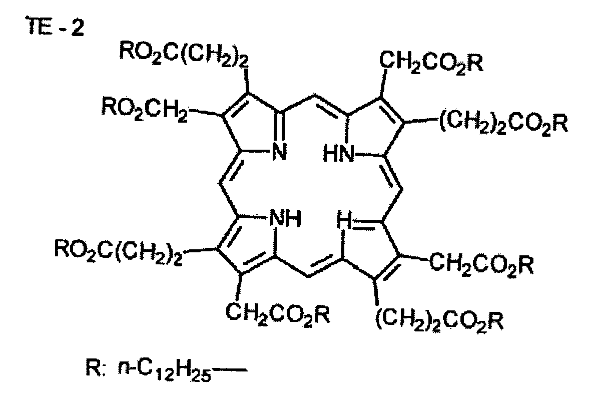

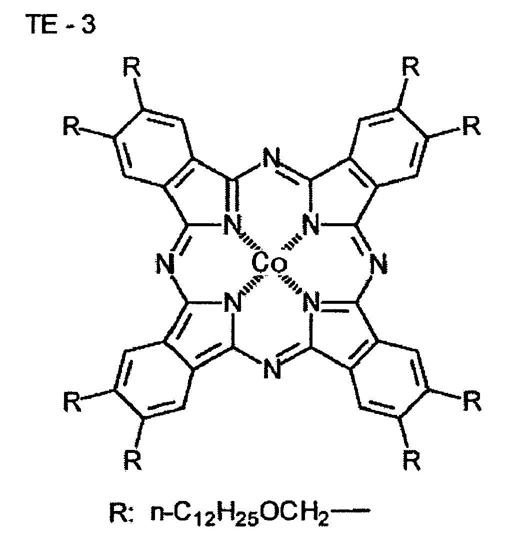

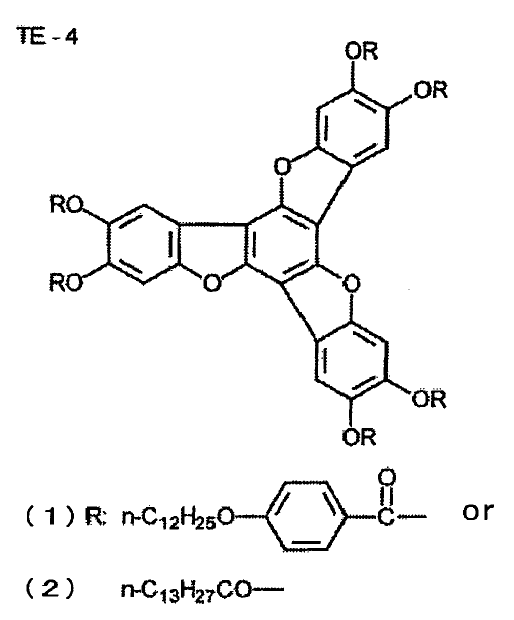

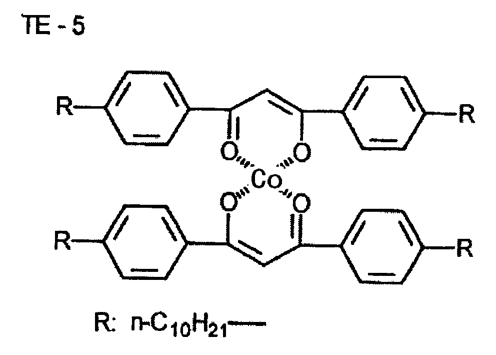

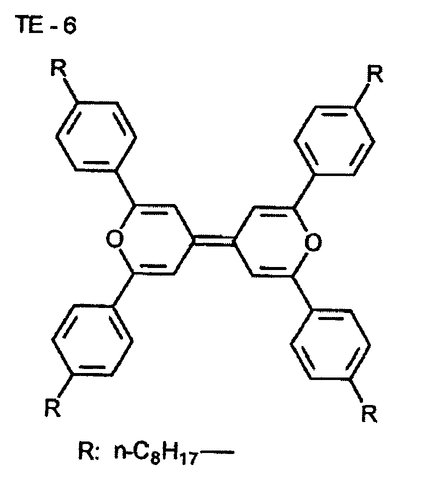

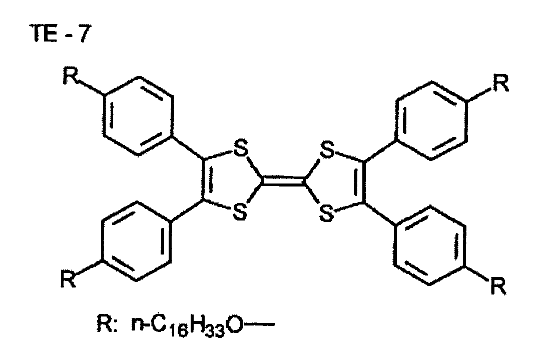

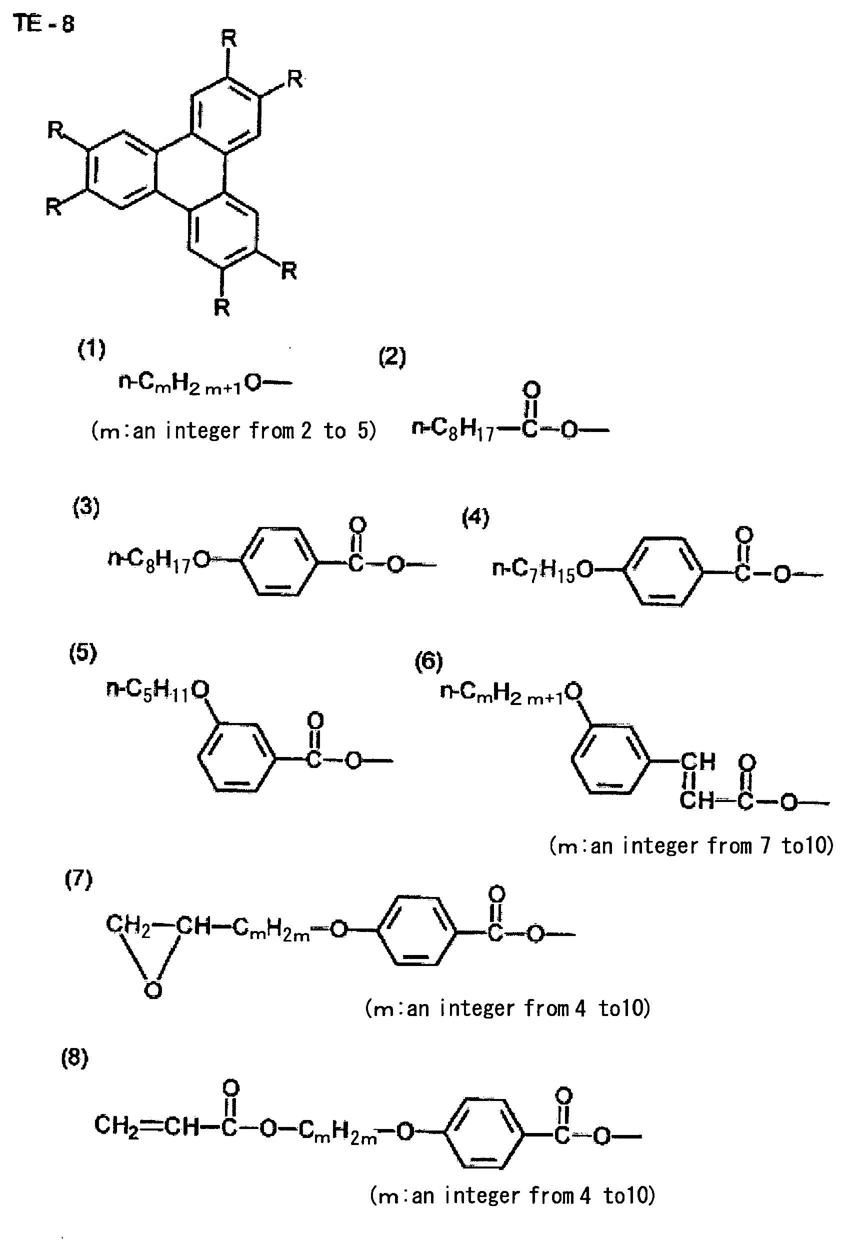

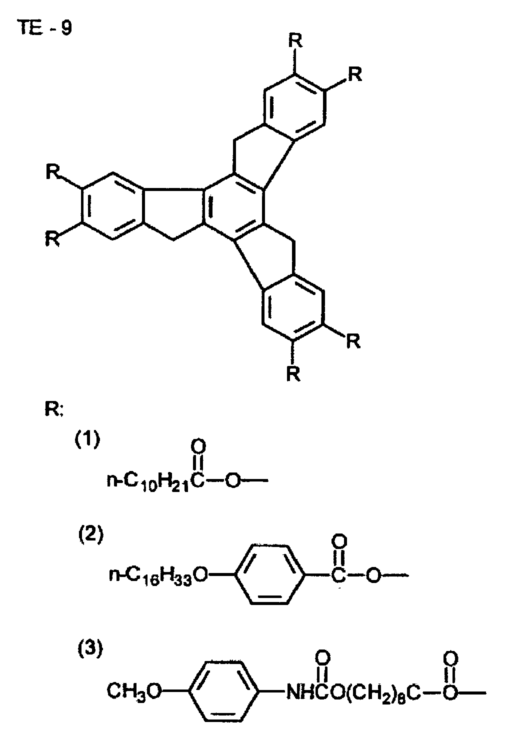

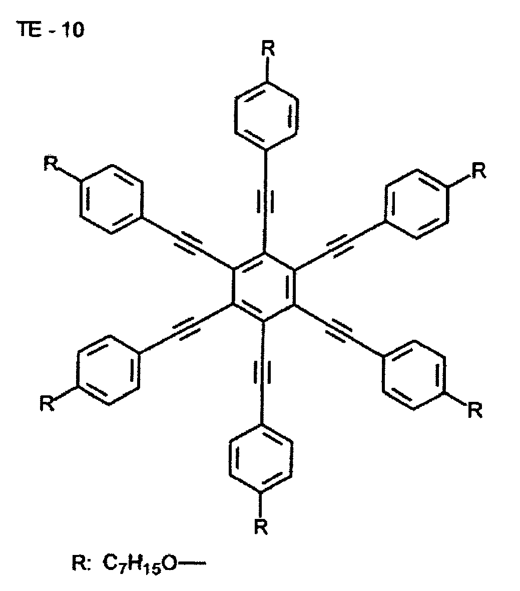

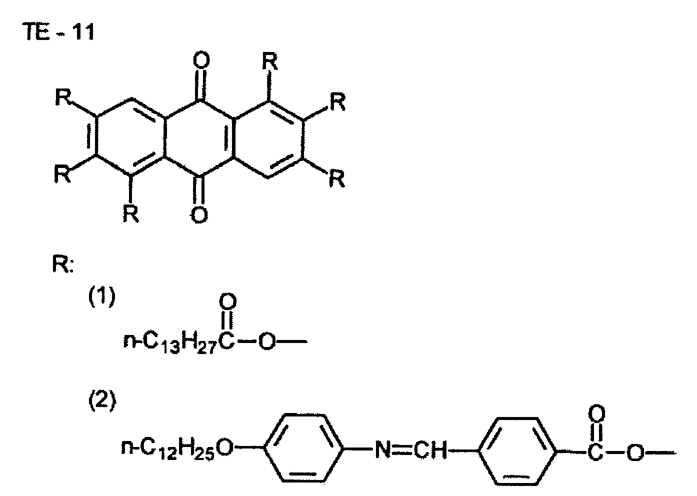

When the rare optically anisotropic layer is prepared from a composition containing a liquid crystal compound, the composition containing a liquid crystal compound (for example a coating liquid) is preferably applied to a surface of an alignment layer, described in detail later, aligning liquid crystalline molecules as to show a desired liquid crystal phase, and fixing the liquid crystal phase under heating or light-irradiating.

When a discotic liquid crystalline compound having reactive groups is used as the liquid crystalline compound, the discotic molecules in the layer may be fixed in any alignment state such as a horizontal alignment state, vertical alignment state, tilted alignment state and twisted alignment state. It is preferred that the molecules are fixed in a horizontal alignment state, a vertical alignment state and a twisted alignment state, and it is more preferred that the molecules fixed in a horizontal alignment state. "Horizontal alignment state" refers to a state that the disk-planes of the cores thereof and a layer plane are parallel to each other. However, they are not required to be exactly parallel to each other. In the specification, "horizontal alignment state" should be understood as an alignment state in which the disk-plane is aligned with a tilt angle against a layer plane less than 10 degree.
The optically anisotropic layer may consist of two or more layers. When two or more layers formed of the liquid-crystalline compositions are stacked, the combination of the liquid-crystalline compositions is not particularly limited, and the combination may be a stack formed of liquid-crystalline compositions all comprising discotic liquid-crystalline molecules, a stack formed of liquid-crystalline compositions all comprising rod-like liquid-crystalline molecules, or a stack formed of a layer comprising discotic liquid-crystalline molecules and a layer comprising rod-like liquid-crystalline molecules. Combination of orientation state of the individual layers also is not particularly limited, allowing stacking of the optically anisotropic layers having the same orientation status, or stacking of the optically anisotropic layer having different orientation states.

The composition containing a liquid-crystalline compound is preferred to be applied to an alignment layer described below , as a coating liquid containing a liquid-crystalline compound, a polymerization initiator as described below or other additives. The solvent used for preparing the coating liquid is preferably an organic solvent. Examples of organic solvents include amides (e.g., N,N-dimethyl formamide), sulfoxides (e.g., dimethyl sulfoxide), heterocyclic compounds (e.g., pyridine), hydrocarbons (e.g., benzene, hexane), alkyl halides (e.g., chloroform, dichloromethane), esters (e.g., methyl acetate, butyl acetate), ketones (e.g., acetone, methyl ethyl ketone) and ethers (e.g., tetrahydrofuran, 1,2-dimethoxyethane). Alkyl halides and ketones are preferred. Two or more organic solvents may be used in combination.

### [Fixing of liquid-crystalline molecules in an alignment state]

The liquid-crystalline molecules in an alignment state are preferably fixed without disordering the state. Fixing is preferably carried out by the polymerization reaction of the reactive groups contained in the liquid-crystalline molecules. The polymerization reaction includes thermal polymerization reaction using a thermal polymerization initiator and photo-polymerization reaction using a photo-polymerization initiator. Photo-polymerization reaction is preferred. Examples of photo-polymerization initiators include alpha-carbonyl compounds (described in US Patents Nos. 2,367,661 and 2,367,670), acyloin ethers (described in US Patent No. 2,448,828), alpha -hydrocarbon-substituted aromatic acyloin compounds (described in US Patent No. 2,722,512), polynuclear quinone compounds (described in US Patents Nos. 3,046,127 and 2,951,758), combinations of triarylimidazole dimers and p-aminophenyl ketone (described in US Patent No. 3,549,367), acridine and phenazine compounds (described in Japanese Laid-Open Patent Publication (Tokkai) syo No. 60-105667 and US Patent No. 4,239,850) and oxadiazole compounds (described in US Patent No. 4,212,970).

As the cationic-polymerization initiator, examples include organic sulfonium salts, iodonium salts, and phosphonium salts. As a counter ion of these compounds, an antimonate, a phosphate, or the like is preferably used.

The amount of the photo-polymerization initiators to be used is preferably 0.01 to 20 % by weight, more preferably 0.5 to 5 % by weight on the basis of solids in the coating liquid. Irradiation for polymerizing the liquid-crystalline molecules preferably uses UV rays. The irradiation energy is preferably 20 mJ/cm² to 10 J/cm², and more preferably 100 to 800 mJ/cm².
luminance is preferably 10 to 1000 mW/cm², more preferably 20 to 500 mW/cm², and further preferably 40 to 350 mW/cm². The irradiation wavelength is preferably 250 to 450 nm, and more preferably 300 to 410 nm at the peak. Irradiation may be carried out in an atmosphere of inert gas such as nitrogen gas and/or under heating to facilitate the photo-polymerization reaction.

### [Orientation induced by irradiation of polarized light (Photoinduced Orientation)]

The optically anisotropic layer may exhibit in-plane retardation attributed to photoinduced orientation with the aid of polarized light irradiation. The polarized light irradiation may be carried out at the same time with photo-polymerization process in the fixation of orientation, or the polarized light irradiation may precede and then may be followed by non-polarized light irradiation for further fixation, or the non-polarized light irradiation for fixation may precede and the polarized light irradiation may succeed for the photoinduced orientation. For the purpose of obtaining a large retardation, it is preferable to carry out only the polarized light irradiation, or to carry out the polarized light irradiation first preferably after coating and alignment of the layer comprising the liquid crystalline molecules. The polarized light irradiation is preferably carried out under an inert gas atmosphere having an oxygen concentration of 0.5% or below. The irradiation energy is preferably 20 mJ/cm² to 10 J/cm², and more preferably 100 mJ/cm² to 800 mJ/cm². The luminance is preferably 20 to 1000 mW/cm², more preferably 50 to 500 mW/cm², and still more preferably 100 to 350 mW/cm². Types of the liquid-crystalline molecule to be hardened by the polarized light irradiation are not particularly limited, wherein the liquid-crystalline molecule having an ethylenic unsaturated group as the reactive group is preferable. It is preferred that the irradiation light to be used has a peak falling within the range from 300 to 450 nm, more preferred from 350 to 400 nm.

The optically anisotropic layer exhibiting in-plane retardation attributed to the photoinduced orientation with the aid of the polarized light irradiation is excellent in particular for optical compensation of VA-mode liquid crystal display device.

### [Post-curing with UV-light irradiation after irradiation of polarized light]

After the first irradiation of polarized light for photoinduced orientation, the optically anisotropic layer may be irradiated with polarized or non-polarized light so as to improve the reaction rate (post-curing step). As a result, the adhesiveness is improved and, thus, the optically anisotropic layer can be produced with larger feeding speed. The post-curing step may be carried out with polarized or non-polarized light, and preferably with polarized light. Two or more steps of post-curing are preferably carried out with only polarized light, with only non-polarized light or with combination of polarizing and non-polarized light. When polarized and non-polarized light are combined, irradiating with polarized light previous to irradiating with non-polarized light is preferred. The irradiation of UV light may be carried out under an inert gas atmosphere, and preferably under an inert gas atmosphere where the oxygen gas concentration is 0.5 % or below. The irradiation energy is preferably 20 mJ/cm² to 10 J/cm², and more preferably 100 to 800 mJ/cm². The luminance is preferably 20 to 1000 mW/cm², more preferably 50 to 500 mW/cm², and still more preferably 100 to 350 mW/cm². As the irradiation wave length, it is preferred that the irradiation with polarized light has a peak falling within the range from 300 to 450 nm, more preferred from 350 to 400 nm. It is also preferred that the irradiation with non-polarized light has a peak falling within the range from 200 to 450 nm, more preferred from 250 to 400 nm.

### [Horizontal orientation agent]

At least one compound selected from the group consisting of the compounds represented by formula (1), (2) or (3), and fluorine-containing homopolymer and copolymer using the monomer represented by the general formula (4), which are shown below, may be added to the composition used for forming the optically anisotropic layer, in order to promote aligning the liquid-crystalline molecules horizontally. In the specification, each of the terms "horizontal alignment" and "planar alignment" means that, regarding rod-like liquid-crystalline molecules, the molecular long axes thereof and a layer plane are parallel to each other, and, regarding discotic liquid-crystalline molecules, the disk-planes of the cores thereof and a layer plane are parallel to each other. However, they are not required to be exactly parallel to each other, and, in the specification, each of the terms "horizontal alignment" and "planar alignment" should be understood as an alignment state in which molecules are aligned with a tilt angle against a layer plane less than 10 degree. The tilt angle is preferably from 0 to 5 degree, more preferably 0 to 3 degree, much more preferably from 0 to 2 degree, and most preferably from 0 to 1 degree.

The formula (1) to (4) will be described in detail below.

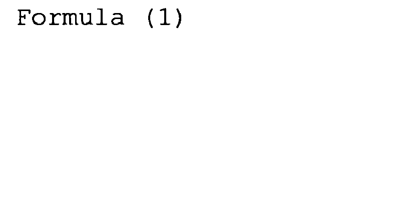

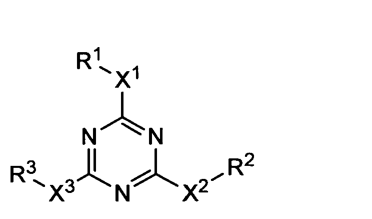

In the formula, R¹, R² and R³ each independently represent a hydrogen atom or a substituent; and X¹, X² and X³ respectively represent a single bond or a divalent linking group. As the substituent represented by each R¹, R² and R³, preferable examples include a substituted or unsubstituted alkyl group (an unsubstituted alkyl group or an alkyl group substituted with fluorine atom is more preferable), a substituted or unsubstituted aryl group (an aryl group having an alkyl group substituted with fluorine atom is more preferable), a substituted or unsubstituted amino group, an alkoxy group, an alkylthio group, and a halogen atom. The divalent linking group represented by each of X¹, X² and X³ may preferably be an alkylene group, an alkenylene group, a divalent aromatic group, a divalent heterocyclic group, -CO-, -NR^{a}- (wherein R^{a} represents a C₁₋₅ alkyl group or hydrogen atom), -O-, -S-, -SO-,-SO₂-, or a divalent linking group formed by combining two or more groups selected from the above listed groups). The divalent linking group is more preferably a group selected from a group consisting of an alkylene group, phenylene group, -CO-, -NR^{a}-, -O-, -S-, and -SO₂-, or a divalent linking group formed by combining two or more groups selected from the above group. The number of the carbon atoms of the alkylene group is preferably 1 to 12. The number of the carbon atoms of the alkenylene group is preferably 2 to 12. The number of the carbon atoms of the divalent aromatic group is preferably 6 to 10.

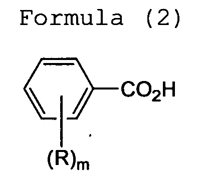

In the formula, R represents a substituent, and m represents an integer of 0 to 5. When m is 2 or more, plural R are same or different to each other. Preferable examples of the substituent represented by R are the same as the examples listed above for each of R¹, R², and R³. m is preferably an integer of 1 to 3, more preferably 2 or 3.

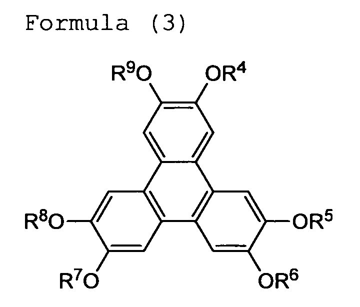

In the formula, R⁴, R⁵, R⁶, R⁷, R⁸ and R⁹ each independently represents hydrogen atom or a substituent. Preferable examples of the substituent represented by each of R⁴, R⁵, R⁶, R⁷, R⁸ and R⁹ are the same as the examples listed above for each of R¹, R², and R³ in the general formula (1).

Examples of the planar alignment agent, which can be used in the present invention, include those described in paragraph [0092] to [0096] in Japanese Laid-Open Patent Publication (Tokkai) No. 2005-099248 and the methods for preparing such compounds are described in the publication.

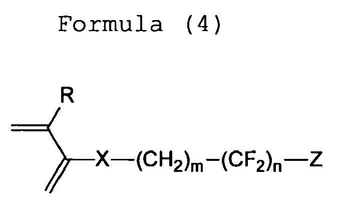

In the formula, R represents hydrogen atom or methyl group, X represents oxygen atom or sulfur atom, Z represents hydrogen atom or fluorine atom; m represents an integer of 1 to 6, n represents an integer of 1 to 2. The polymer compounds described in Japanese Laid-Open Patent Publications (Tokkai) Nos. 2005-206638 and 2006-91205 can be used as horizontal orientation agents for reducing unevenness in coating. The method of preparation of the compounds is also described in the publications.

The amount of the horizontal orientation agents added is preferably from 0.01 to 20 weight %, more preferably from 0.01 to 10 weight % and much more preferably from 0.02 to 1 weight %. The compounds represented by the aforementioned general formula (1) to (4) may be used singly, or two or more types of them may be used in combination.

### [Alignment Layer]

An alignment layer may be used for forming the optically anisotropic layer. The alignment layer may be generally formed on a surface of the support or a surface of an undercoating layer formed on the support. The alignment layer has ability of controlling the alignment of liquid crystalline molecules thereon, and, as far as having such ability, may be selected from various known alignment layers. The alignment layer that can be employed in the present invention may be provided by rubbing a layer formed of an organic compound (preferably a polymer), oblique vapor deposition, the formation of a layer with microgrooves, or the deposition of organic compounds (for example, omega-tricosanoic acid, dioctadecylmethylammonium chloride, and methyl stearate) by the Langmuir-Blodgett (LB) film method. Further, alignment layers imparted with orientation functions by exposure to an electric or magnetic field or irradiation with light are also known.

Examples of the organic compound, which can be used for forming the alignment layer, include polymers such as polymethyl methacrylate, acrylic acid /methacrylic acid copolymer, styrene/maleimide copolymer, polyvinyl alcohol, poly(N-methyrol acrylamide), styrene/vinyl toluene copolymer, chlorosulfonated polyethylene, nitrocellulose, polyvinyl chloride, chlorinated polyolefin, polyester, polyimide, vinyl acetate/ vinyl chloride copolymer, ethylene/vinyl acetate copolymer, carboxymethyl cellulose, polyethylene, polypropylene and polycarbonates; and silane coupling agents. Preferred exampled of the polymer include polyimide, polystyrene, styrene based polymers, gelatin, polyvinyl alcohol and alkyl-modified polyvinyl alcohol having at least one alkyl group (preferably C₆ or longer alkyl group).

For production of an alignment layer, a polymer may preferably used. The types of polymer, which is used for forming the alignment layer, may be decided depending on what types of alignment state of liquid crystal (in particular how large of tilt angle) is preferred. For forming an alignment layer capable of aligning liquid crystalline molecules horizontally, it is required not to lower the surface energy of the alignment layer, and polymer may be selected from typical polymers have been used for alignment layers. Examples of such polymer are described in various documents concerning liquid crystal cells or optical compensation sheets. Polyvinyl alcohols, modified polyvinyl alcohols, poly acrylic acid, acrylic acid/acrylate copolymers, polyvinyl pyrrolidone, cellulose and modified cellulose are preferably used. Materials used for producing the alignment layer may have at least one functional group capable of reacting with the reactive group of liquid crystalline compound in the optically anisotropic layer. Examples of the polymer having such a functional group include polymers having side chains comprising a repeating unit having such functional group, and polymers having a cyclic moiety substituted with such a functional group. It is more preferable to use an alignment layer capable of forming a chemical bond with the liquid-crystalline compound at the interface, and a particularly preferable example of such alignment layer is a modified polyvinyl alcohol, described in Japanese Laid-Open Patent Publication "Tokkaihei" No. 9-152509, which has an acrylic group introduced in the side chain thereof using acid chloride or Karenz MOI (product of Showa Denko K.K.). The thickness of the alignment layer is preferably 0.01 to 5 µm, and more preferably 0.05 to 2 µm. An alignment layer (also referred to as an intermediate layer/ alignment layer in this specification) in the transfer material of the present invention may also have a function as a layer for oxygen shut-off.

Polyimide, preferably fluorine-containing polyimide, films, which have been used as an alignment layer for LCD, are also preferable. The film may be formed by applying poly(amic acid), provided, for example, as LQ/LX series products by Hitachi Chemical Co., Ltd or as SE series products by NISSAN CHEMICAL INDUSTRIES, LTD, to a surface of the support, heating at 100 to 300 °C for 0.5 to one hour to form a polymer layer, and rubbing a surface of the polymer layer.

The rubbing treatment may be carried out with known techniques which have been employed in the usual step for aligning liquid crystalline molecules of LCD. In particular, the rubbing treatment may be carried out by rubbing a surface of a polymer layer in a direction with paper, gauze, felt, rubber, nylon or polyester fiber or the like. The rubbing treatment may be carried out, for example, by rubbing a surface of a polymer layer in a direction at several times with a cloth having same length and same diameter fibers grafted uniformly.

Examples of the material used in oblique vapor deposition include metal oxides such as SiO₂, which is a typical material, TiO₂ and ZnO₂; fluorides such as MgF₂; metals such as Au and Al. Any high dielectric constant metal oxides can be used in oblique vapor deposition, and, thus, the examples thereof are not limited to the above mentioned materials. The inorganic oblique deposition film may be produced with a deposition apparatus. The deposition film may be formed on an immobile polymer film (a support) or on a long film fed continuously.

### [Adhesive Layer for Transfer]

Next paragraphs will explain an adhesive layer for transfer, which is used when the process of the present invention is conducted with a transfer material. The adhesive layer for transfer is not particularly limited as far as the layer is transparent and non-colored, and has sufficient property for transfer. Examples include adhesive layer using an adhesive agent, a photosensitive polymer layer, a pressure-sensitive polymer layer, and a heat-sensitive polymer layer. Among these, the photosensitive polymer layer and the heat-sensitive polymer layer are preferred in view of heat-resistance required in the application to a substrate for liquid crystal display device.

The adhesive agent is preferred to exhibit, for example, good optical transparency, suitable wettability, and adhesive characteristics such as cohesiveness and adhesiveness. Specific examples are adhesive agents prepared using a suitable base polymer such as an acrylic polymer, silicone polymer, polyester, polyurethane, polyether, or synthetic rubber. The adhesive characteristics of the adhesive layer can be suitably controlled by conventionally known methods. These include adjusting the composition and/or molecular weight of the base polymer forming the adhesive layer, and adjusting the degree of crosslinking and/or the molecular weight thereof by means of the crosslinking method, the ratio of incorporation of crosslinking functional groups, and the crosslinking agent blending ratio.

The pressure sensitive polymer layer is not specifically limited as far as it develops adhesiveness when pressure is applied. Various adhesives, such as rubbers, acrylics, vinyl ethers, and silicones, can be employed in the pressure-sensitive adhesive. The adhesives may be employed in the manufacturing and coating stages in the form of solvent adhesives, non-water-based emulsion adhesives, water-based emulsion adhesives, water-soluble adhesives, hot melt adhesives, liquid hardening adhesives, delayed tack adhesives, and the like. Rubber adhesives are described in the New Polymer Library 13, "Adhesion Techniques," Kobunshi Kankokai (K.K.), p. 41 (1987). There are vinyl ether adhesives comprised mainly of alkyl vinyl ether compounds having 2 to 4 carbon atoms in the form of vinyl chloride/vinyl acetate copolymers, vinyl acetate polymers, polyvinyl butyrals, and the like, to which a plasticizer is admixed. Silicone adhesives may be employed in which rubber siloxane is used to impart film condensation strength during film formation and resinous siloxane is used to impart adhesiveness.

The heat-sensitive polymer layer is not specifically limited as far as it develops adhesiveness when heat is applied. Examples of heat-sensitive adhesives are hot-melt compounds and thermoplastic resins. Examples of the hot-melt compounds are low molecular weight compounds in the form of thermosetting resins such as polystyrene resin, acrylic resin, styrene-acrylic resin, polyester resin, and polyurethane resin; and various waxes in the form of vegetable waxes such as carnauba wax, Japan wax, candelilla wax, rice wax, and auricury wax; animal waxes such as beeswax, insect waxes, shellac, and whale wax; petroleum waxes such as paraffin wax, microcrystalline wax, polyethylene wax, Fischer-Tropshe wax, ester wax, and oxide waxes; and mineral waxes such as montan wax, ozokerite, and ceresin wax. Further examples are rosin, hydrated rosin, polymerized rosin, rosin-modified glycerin, rosin-modified maleic acid resin, rosin-modified polyester resin, rosin-modified phenol resin, ester rubber, and other rosin derivatives; as well as phenol resin, terpene resin, ketone resin, cyclopentadiene resin, aromatic hydrocarbon resin, aliphatic hydrocarbon resin, and alicyclic hydrocarbon resin.

These hot-melt compounds normally have a molecular weight of not greater than 10,000, preferably not greater than 5,000, and a melting or softening point desirably falling within a range of 50 to 150°C. These hot-melt compounds may be used singly or in combinations of two or more. Examples of the above-mentioned plasticizing resin are ethylene copolymers, polyamide resins, polyester resins, polyurethane resins, polyolefin resins, acrylic resins, and cellulose resins. Among these, the ethylene copolymers are preferably used.

### [Photosensitive polymer Layer]

The photosensitive polymer layer may be formed of a photosensitive polymer composition, for which either of positive type and negative type is acceptable, and commercial resist material may also be used. A photosensitive polymer layer used as an adhesive layer for transfer is hardened by exposure (light irradiation). Therefore the substrate and the optically anisotropic layer can be adhered by the exposure. From the viewpoint of environment and explosion protection, the photosensitive polymer can be developed preferably with an aqueous solution containing 5% or less organic solvent, and more preferably with an alkaline solution. The photosensitive polymer layer is preferably formed of a polymer composition comprising at least (1) a polymer, (2) a monomer or oligomer, and (3) a photopolymerization initiator or photopolymerization initiator system.

These components (1) to (3) will be explained below.

### (1) Polymer

The polymer (which may be referred simply to as "binder", hereinafter) is preferably a alkaline-soluble polymer consisting of a polymer having, in the side chain thereof, a polar group such as carboxylic acid groups or carboxylic salt. Examples thereof include methacrylic acid copolymer, acrylic acid copolymer, itaconic acid copolymer, crotonic acid copolymer, maleic acid copolymer, and partially-esterified maleic acid copolymer described in Japanese Laid-Open Patent Publication "Tokkaisho" No. 59-44615, Examined Japanese Patent Publication "Tokkosho" Nos. 54-34327, 58-12577 and 54-25957, Japanese Laid-Open Patent Publication "Tokkaisho" Nos. 59-53836 and 59-71048. Cellulose derivatives having on the side chain thereof a carboxylic acid group can also be exemplified. Besides these, also cyclic acid anhydride adduct of hydroxyl-group-containing polymer are preferably used. Particularly preferable examples include copolymer of benzyl (meth)acrylate and (meth)acrylic acid described in United States Patent No. 4139391, and multi-system copolymer of benzyl (meth)acrylate and (meth)acrylic acid and other monomer. These binder polymers having polar groups may be used independently or in a form of composition comprising a general film-forming polymer. The content of the polymer generally falls in the range from 20 to 70% by weight, preferably from 25 to 65% by weight, and more preferably from 25 to 45% by weight with respect to the total weight of the solid components contained in the polymer composition.

### (2) Monomer or Oligomer

The monomer or oligomer used for the photosensitive polymer layer is preferably selected from compounds, having two or more ethylenic unsaturated double bonds, capable of causing addition polymerization upon being irradiated by light. As such monomer and oligomer, compounds having at least one ethylenic unsaturated group capable of addition polymerization, and having a boiling point of 100°C or above under normal pressure can be exemplified. The examples include monofunctional acrylates and monofunctional methacrylates such as polyethylene glycol mono(meth)acrylate, polypropylene glycol mono(meth)acrylate and phenoxyethyl (meth)acrylate; multi-functional acrylate and multi-functional methacrylate, obtained by adding ethylene oxide or propylene oxide to multi-functional alcohols such as trimethylol propane and glycerin, and then converting them into (meth) acrylates, such as polyethylene glycol di(meth)acrylate, polypropylene glycol di(meth)acrylate, trimethylolethane triacrylate, trimethylolpropane tri(meth)acrylate, trimethylolpropane diacrylate, neopentyl glycol di(meth)acrylate, pentaerythritol tetra(meth)acrylate, pentaerythritol tri(meth)acrylate, dipentaerythritol hexa(meth)acrylate, dipentaerythritol penta(meth)acrylate, hexanediol di(meth)acrylate, trimethylol propane tri(acryloyloxypropyl)ether, tri(acryloyloxyethyl)isocyanurate, tri(acryloyloxyethyl)cyanurate, glycerin tri(meth)acrylate.

Additional examples of multi-functional acrylates and methacrylates include urethane acrylates such as those described in Examined Japanese Patent Publication "Tokkosho" Nos. 48-41708, 50-6034 and Japanese Laid-Open Patent Publication "Tokkaisho" No. 51-37193; polyester acrylates such as those described in Japanese Laid-Open Patent Publication "Tokkaisho" No. 48-64183, Examined Japanese Patent Publication "Tokkosho" Nos. 49-43191 and 52-30490; and epoxyacrylates which are reaction products of epoxy polymer and (meth)acrylic acid. Of these, trimethylolpropane tri(meth)acrylate, pentaerythritol tetra(meth)acrylate, dipentaerythritol hexa(meth)acrylate, dipentaerythritol penta(meth)acrylate are preferable.

Besides these, also "polymerizable compound B" described in the Japanese Laid-Open Patent Publication "Tokkaihei" No. 11-133600 are exemplified as the preferable examples.

These monomers or oligomers can be used independently or in combination of two or more species thereof. The content of the monomer or oligomer generally falls in the range from 5 to 50% by weight, and more preferably from 10 to 40% by weight, of the total weight of the solid components contained in the polymer composition.

### (3) Photopolymerization Initiator or Photopolymerization Initiator System

The photopolymerization initiator or photopolymerization initiator system used for the photosensitive polymer layer can be exemplified by vicinal polyketaldonyl compounds disclosed in United States Patent No. 2367660, acyloin ether compounds described in United States Patent No. 2448828, aromatic acyloin compounds substituted by α-hydrocarbon described in United States Patent No. 2722512, polynuclear quinone compounds described in United States Patent Nos. 3046127 and 2951758, combination of triaryl imidazole dimer and p-aminoketone described in United States Patent No. 3549367, benzothiazole compounds and trihalomethyl-s-triazine compounds described in Examined Japanese Patent Publication "Tokkosho" No. 51-48516, trihalomethyl-triazine compounds described in United States Patent No. 4239850, and trihalomethyl oxadiazole compounds described in United States Patent No. 4212976. Trihalomethyl-s-triazine, trihalomethyl oxadiazole and triaryl imidazole dimer are particularly preferable.

Besides these, "polymerization initiator C" described in Japanese Laid-Open Patent Publication "Tokkaihei" No. 11-133600 can also be exemplified as a preferable example.

Such photopolymerization initiator or photopolymerization initiator system may be used independently or in a form of mixture of two or more species, wherein it is particularly preferable to use two or more species. Use of at least two species of photopolymerization initiator makes it possible to improve the display characteristics, and in particular to reduce non-uniformity in the display.

The content of the photopolymerization initiator or the photopolymerization initiator system generally falls in the range from 0.5 to 20% by weight, and more preferably from 1 to 15% by weight, of the total weight of the solid components contained in the polymer composition.

The photosensitive polymer layer preferably contains an appropriate surfactant, from the viewpoint of effectively preventing non-uniformity. Any surfactants are applicable so far as they are miscible with the photosensitive polymer composition. Surfactants preferably applicable to the present invention include those disclosed in paragraphs [0090] to [0091] in Japanese Laid-Open Patent Publication "Tokkai" No. 2003-337424, paragraphs [0092] to [0093] in Japanese Laid-Open Patent Publication "Tokkai" No. 2003-177522, paragraphs [0094] to [0095] in Japanese Laid-Open Patent Publication "Tokkai" No. 2003-177523, paragraphs [0096] to [0097] in Japanese Laid-Open Patent Publication "Tokkai" No. 2003-177521, paragraphs [0098] to [0099] in Japanese Laid-Open Patent Publication "Tokkai" No. 2003-177519, paragraphs [0100] to [0101] in Japanese Laid-Open Patent Publication "Tokkai" No. 2003-177520, paragraphs [0102] to [0103] in Japanese Laid-Open Patent Publication "Tokkaihei" No. 11-133600 and those disclosed as the invention in Japanese Laid-Open Patent Publication "Tokkaihei" No. 6-16684. In order to obtain higher effects, it is preferable to use any of fluorine-containing surfactants and/or silicon-base surfactants (fluorine-containing surfactant, or, silicon-base surfactant, or surfactant containing both of fluorine atom and silicon atom), or two or more surfactants selected therefrom, wherein the fluorine-containing surfactant is most preferable. When the fluorine-containing surfactant is used, the number of fluorine atoms contained in the fluorine-containing substituents in one surfactant molecule is preferably 1 to 38, more preferably 5 to 25, and most preferably 7 to 20. Too large number of fluorine atoms degrades the solubility in general fluorine-free solvents and thus is undesirable. Too small number of fluorine atoms does not provide effects of improving the non-uniformity and thus is undesirable.

Particularly preferable surfactants can be those containing a copolymer which includes the monomers represented by the formulae (a) and (b) below, having a ratio of mass of formula (a)/formula (b) of 20/80 to 60/40:

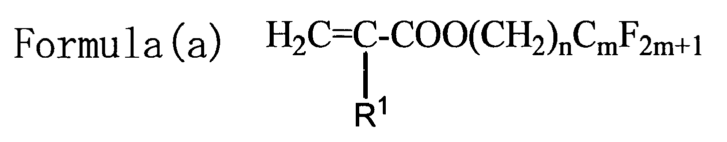

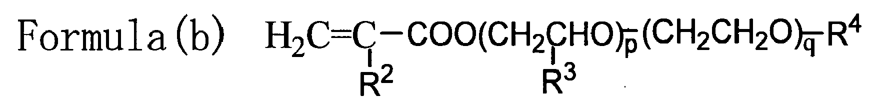

In the formulas, R¹, R² and R³ independently represent a hydrogen atom or a methyl group, R⁴ represents a hydrogen atom or an alkyl group having the number of carbon atoms of 1 to 5. n represents an integer from 1 to 18, and m represents an integer from 2 to 14. p and q represents integers from 0 to 18, excluding the case where both of p and q are 0.

It is to be defined now that a monomer represented by the formula (a) and a monomer represented by the formula (b) of the particularly preferable surfactants are denoted as monomer (a) and monomer (b), respectively. CₘF₂ₘ₊₁ in the formula (a) may be straight-chained or branched. m represents an integer from 2 to 14, and is preferably an integer from 4 to 12. Content of CₘF₂ₘ₊₁ is preferably 20 to 70% by weight, and more preferably 40 to 60% by weight, of the monomer (a). R¹ represents a hydrogen atom or a methyl group. n represents 1 to 18, and more preferably 2 to 10. R² and R³ in the formula (b) independently represent a hydrogen atom or a methyl group, and R⁴ represents a hydrogen atom or an alkyl group having the number of carbon atoms of 1 to 5. p and q respectively represent integers of 0 to 18, excluding the case where both of p and q are 0. p and q are preferably 2 to 8.

The monomer (a) contained in one particularly preferable surfactant molecule may be those having the same structure, or having structures differing within the above-defined range. The same can also be applied to the monomer (b).

The weight-average molecular weight Mw of a particularly preferable surfactant preferably falls in the range from 1000 to 40000, and more preferably from 5000 to 20000. The surfactant characteristically contains a copolymer composed of the monomers expressed by the formula (a) and the formula (b), and having a ratio of mass of monomer (a)/monomer (b) of 20/80 to 60/40. Hundred parts by weight of a particularly preferable surfactant is preferably composed of 20 to 60 parts by weight of the monomer (a), 80 to 40 parts by weight of the monomer (b), and residual parts by weight of other arbitrary monomers, and more preferably 25 to 60 parts by weight of the monomer (a), 60 to 40 parts by weight of the monomer (b), and residual parts by weight of other arbitrary monomer.

Copolymerizable monomers other than the monomers (a) and (b) include styrene and derivatives or substituted compounds thereof including styrene, vinyltoluene, α-methylstyrene, 2-methylstyrene, chlorostyrene, vinylbenzoic acid, sodium vinylbenzene sulfonate, and aminostyrene; dienes such as butadiene and isoprene; and vinyl-base monomers such as acrylonitrile, vinylethers, methacrylic acid, acrylic acid, itaconic acid, crotonic acid, maleic acid, partially esterified maleic acid, styrene sulfonic acid, maleic anhydride, cinnamic acid, vinyl chloride and vinyl acetate.

A particularly preferable surfactant is a copolymer of the monomer (a), monomer (b) and so forth, allowing monomer sequence of random or ordered, such as forming a block or graft, while being not specifically limited. A particularly preferable surfactant can use two or more monomers differing in the molecular structure and/or monomer composition in a mixed manner.

Content of the surfactant is preferably adjusted to 0.01 to 10% by weight to the total amount of solid components of the photosensitive polymer layer, and more preferably to 0.1 to 7% by weight. The surfactant contains predetermined amounts of a surfactant of a specific structure, ethylene oxide group and polypropylene oxide group. Therefore, addition of the surfactant at an amount within a specific range to the photosensitive polymer layer enables non-uniformity to reduce in the display on the liquid crystal display device provided with the photosensitive polymer layer. When the content is less than 0.01% by weight to the total amount of solid components, the non-uniformity in the display is not reduced, and when the content exceeds 10% by weight, the effect of reducing the non-uniformity in the display is saturated. Production of the color filter while adding the particularly preferable surfactant described in the above to the photosensitive polymer layer is preferable in terms of improving the non-uniformity in the display.

Preferable specific examples of fluorine base surfactant include the compounds described in paragraphs [0054] to [0063] in Japanese Laid-Open Patent Publication "Tokkai" No. 2004-163610. The commercial surfactants listed below may also be used directly. As applicable commercial surfactants, examples include fluorine-containing surfactants such as Eftop EF301, EF303 (products of Shin-Akita Kasei K.K.), Florade FC430, 431 (products of Sumitomo 3M Co., Ltd.), Megafac F171, F173, F176, F189, R08 (products of Dainippon Ink and Chemicals, Inc.), Surflon S-382, SC101, 102, 103, 104, 105, 106 (products of Asahi Glass Co., Ltd.), and silicon-base surfactants. Also polysiloxane polymer KP-341 (product of Shin-Etsu Chemical Co., Ltd.) and Troysol S-366 (product of Troy Chemical Industries, Inc.) may be used as the silicon-base surfactants. The compounds disclosed in paragraphs [0046] to [0052] in Japanese Laid-Open Patent Publication "Tokkai" No. 2004-331812, which are fluorine-containing surfactants not containing the monomer represented by the general formula (a).

### [Other Layers]

Between the temporary support and the optically anisotropic layer of the transfer material, a dynamic property control layer to control mechanical characteristics and conformity to irregularity may be preferably provided. The dynamic property control layer preferably exhibit flexible elasticity, is softened by heat, or fluidize by heat. A thermoplastic polymer layer is particularly preferred for the dynamic property control layer. Components used for the thermoplastic polymer layer are preferably organic polymer substances described in Japanese Laid-Open Patent Publication "Tokkaihei" No. 5-72724, and are particularly preferably selected from organic polymer substances having softening points, measured by the Vicat method (more specifically, a method of measuring softening point of polymer conforming to ASTMD1235 authorized by American Society For Testing and Materials) of approximately 80°C or below. More specifically, organic polymers such as polyolefins including polyethylene and polypropylene; ethylene copolymers including those composed of ethylene and vinyl acetate or saponified product thereof, or composed of ethylene and acrylate ester or saponified product thereof; polyvinyl chloride; vinyl chloride copolymers including those composed of vinyl chloride and vinyl acetate or saponified product thereof; polyvinylidene chloride; vinylidene chloride copolymer; polystyrene; styrene copolymers including those composed of styrene and (meth) acrylate ester or saponified product thereof; polyvinyl toluene; vinyltoluene copolymers such as being composed of vinyl toluene and (meth)acrylate ester or saponified product thereof; poly(meth)acrylate ester; (meth)acrylate ester copolymers including those composed of butyl (meth)acrylate and vinyl acetate; vinyl acetate copolymers; and polyamide polymers including nylon, copolymerized nylon, N-alkoxymethylated nylon and N-dimethylamino-substituted nylon.

A transfer material preferably has an intermediate layer for the purpose of preventing mixing of the components during coating of a plurality of layers and during storage after the coating. As the intermediate layer, the oxygen shut-off film having an oxygen shut-off function described as a "separation layer" in Japanese Laid-Open Patent Publication "Tokkaihei" No. 5-72724 is preferably used, by which sensitivity during the exposure increases, and this improves the productivity. Any films showing a low oxygen permeability and being dispersible and soluble to water or aqueous alkaline solution are preferably used as the oxygen shut-off film, and such films can properly be selected from any known films. Of these, particularly preferable is a combination of polyvinyl alcohol and polyvinyl pyrrolidone. One layer may work simultaneously as the above thermoplastic polymer layer, oxygen shut-off layer, and alignment layer.

On the polymer layer, it is preferable to provide a thin protective film for the purpose of preventing contamination or damage during storage. The protective film may be composed of a material same as, or similar to, that used for the temporary support, but must be readily separable from the polymer layer. Preferable examples of material composing the protective film include silicon paper, polyolefin sheet and polytetrafluoroethylene sheet.

The individual layers of the optically anisotropic layer, and optionally-formed photosensitive polymer layer, adhesive layer for transfer, alignment layer, thermoplastic polymer layer and intermediate layer can be formed by coating such as dip coating, air knife coating, curtain coating, roller coating, wire bar coating, gravure coating and extrusion coating (United States Patent No. 2681294). Two or more layers may be coated simultaneously. Methods of simultaneous coating is described in United States Patent Nos. 2761791, 2941898, 3508947, 3526528, and in "Kotingu Kogaku (Coating Engineering), written by Yuji Harazaki, p.253, published by Asakura Shoten (1973).

### [Method of Transferring Transfer Material to Substrate]

Methods of transferring the transfer material on a substrate are not specifically limited, so far as the optically anisotropic layer can be transferred onto the substrate. For example, the transfer material in a film form may be attached to the substrate so that the surface of the adhesive layer for transfer is faced to the surface of the substrate, by pressing with or without heating with rollers or flat plates of a laminator. Specific examples of the laminator and the method of lamination include those described in Japanese Laid-Open Patent Publication Nos. 7-110575, 11-77942, 2000-334836 and 2002-148794, wherein the method described in Japanese Laid-Open Patent Publication No. 7-110575 is preferable in terms of low contamination. The temporary support may be delaminated thereafter, and on the exposed surface of the optically anisotropic layer after the delamination can be provided with another layer such as electrode layer.

### [Optically Anisotropic Layer Having Two or more Different Retardation in Patterned Manner]

The optically anisotropic layer having retardation in a patterned manner can be formed by finally subjecting an optically anisotropic layer formed by changing exposure condition of exposure to each of the pattern to a heating step at 80 to 400 °C. The method of changing exposure condition is not particularly limited. Examples of the method include a method of conducting exposures to each of the patterns under different exposure condition such as exposure energy by using mask, and a method of using a mask which can change exposure condition such as luminance and exposure energy to every pattern. A direct drawing by focusing on the predetermined point by using laser or electron beam without mask can also be employed for patterned exposure under different exposure condition. As a light source used for the exposure, a light source which can irradiate a light of the wavelength which can harden the polymer layer (for example, 365 nm, 405 nm or the like) is preferably used. Specific examples of the light source include extra-high voltage mercury lamp, high voltage mercury lamp, and metal halide lamp. Energy of exposure generally falls in the range generally from about 5 mJ/cm² to 200 mJ/cm², preferably from about 10 mJ/cm² to 100 mJ/cm².

As a method of the patterned exposures of two or more types having different exposure conditions to each other, a method selecting any two or more exposure energies out of exposure energies at 5 mJ/cm² to 100 mJ/cm², and conducting a exposure with mask to each pattern at each of the selected exposure energy. Other examples include a method using mask which absorb or reflect light in a patterned manner, or a method conducting an exposure with mask to each pattern with changing the temperature or concentration of oxygen at the time of exposure.

The above exposure can also be conducted from above the color filter formed on the not-yet-patterned optically anisotropic layer for the production of the liquid crystal display device such as those illustrated in Fig. 3 (b) or (c). In such production, the color filter itself functions like a photomask, and a different exposures with respect to the colors in the color filter can be achieved.

It is preferable that the optically anisotropic layer exhibit optical biaxiality which can exactly compensate a liquid crystal cell, in particular a VA-mode liquid crystal cell. When a rod-like liquid-crystalline compound having reactive group is used to form a film exhibiting optical biaxiality, it is necessary to align rod-like molecules in a twisted cholesteric orientation, or in a twisted hybrid cholesteric orientation in which the tilt angles of the molecules are varied gradually in the thickness-direction, and then to distort the twisted cholesteric orientation or the twisted hybrid cholesteric orientation by irradiation of polarized light. Examples of the method for distorting the orientation by the polarized light irradiation include a method of using a dichroic liquid- crystalline polymerization initiator (EP1389199A1), and a method of using a rod-like liquid-crystalline compound having in the molecule thereof a photo-alignable functional group such as cinnamoyl group (Japanese Laid-Open Patent Publication "Tokkai" No. 2002-6138). The present invention can adopt any of these methods.

It is preferable that the above-explained optically anisotropic layer is a positive a-plate which can exactly compensate a liquid crystal cell of a VA-mode or semi-transmissive type. On the other hand, the above-explained optically anisotropic layer as a positive c-plate can exactly compensate IPS mode, and is also preferable.

In either device of VA-mode or IPS-mode, one of the protective films of the polarizing plate is preferred to be an optical compensation sheet. The optically anisotropic layer as a protective film of the polarizing plate is preferably c-plate in VA-mode, and, in IPS-mode, is preferably an optically biaxial film, in which the minimum refractive index is found in a thickness direction. A uniaxial optically anisotropic layer in the transfer material used in the present invention can be formed by aligning the director of the molecule of a uniaxial rod-like liquid-crystalline compound. Such uniaxial alignment can be achieved by a method of aligning a non-chiral liquid crystal on a rubbed alignment layer or on a photo-alignment layer, by a method of aligning liquid crystal with the aid of magnetic field or electric field, or by a method of aligning liquid crystal with applying external force such as stretching or shearing.

### EXAMPLES

Paragraphs below will more specifically describe the present invention referring to Examples. Any materials, reagents, amount and ratio of use and operations shown in Examples may appropriately be modified without departing from the spirit of the present invention. It is therefore understood that the present invention is by no means limited to specific Examples below.

### (Preparation of Coating Liquid CU-1 for Thermoplastic Polymer Layer)

The composition below was prepared, filtered through a polypropylene filter having a pore size of 30 µ m, and the filtrate was used as coating liquid CU-1 for forming an alignment layer.

| Composition of Coating Liquid for forming Thermoplastic Polymer Layer | (% by weight) |
|---|---|
| methyl methacrylate/2-ethylhexyl acrylate/benzyl methacrylate/methacrylate copolymer (copolymerization ratio (molar ratio)=55/30/10/5, weight-average molecular weight=100,000, Tg≈70°C) | 5.89 |
| styrene/acrylic acid copolymer (copolymerization ratio (molar ratio)=65/35, weight-average molecular weight=10,000, Tg≈100°C) | 13.74 |
| BPE-500 (from Shin-Nakamura Chemical Co., Ltd.) | 9.20 |
| Megafac F-780-F (from Dainippon Ink and Chemicals, Inc.) | 0.55 |
| methanol | 11.22 |
| propylene glycol monomethyl ether acetate | 6.43 |
| methyl ethyl ketone | 52.97 |

### (Preparation of Coating Liquid AL-1 for Intermediate Layer/Alignment layer)

The composition below was prepared, filtered through a polypropylene filter having a pore size of 30µm, and the filtrate was used as coating liquid AL-1 for forming an intermediate layer/alignment layer.

| Composition of Coating Liquid AL-1 for Intermediate Layer/Alignment layer | (% by weight) |
|---|---|
| polyvinyl alcohol (PVA205, from Kuraray Co., Ltd.) | 3.21 |
| polyvinylpyrrolidone (Luvitec K30, from BASF) | 1.48 |
| distilled water | 52.10 |
| methanol | 43.21 |

### (Preparation of Coating Liquid LC-1 for Optically Anisotropic Layer)

The composition below was prepared, filtered through a polypropylene filter having a pore size of 0.2 µm, and the filtrates were used as coating liquid LC-1 for forming an optically anisotropic layer.

LC-1-1 was synthesized according to the method described in Japanese Patent Unexamined Publication No. 2004-123882.

LC-1-2 was synthesized according to the method described in Tetrahedron Lett., Vol. 43, p.6793(2002).

| Composition of Coating Liquid for Optically Anisotropic Layer | (% by weight) |
|---|---|
| rod-like liquid crystal (LC-1-1) | 19.57 |
| horizontal orientation agent (LC-1-2) | 0.01 |
| cationic photopolymerization initiator (Cyracure UVI6974 from Dow Chemical Company) | 0.40 |
| polymerization control agent (IRGANOX1076, Chiba Speciality Chemicals Co., Ltd.) | 0.02 |
| methyl ethyl ketone | 80.0 |

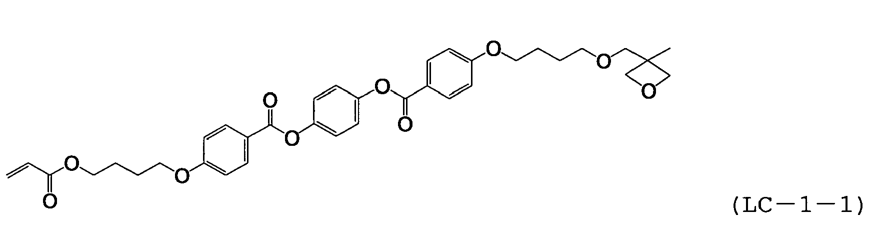

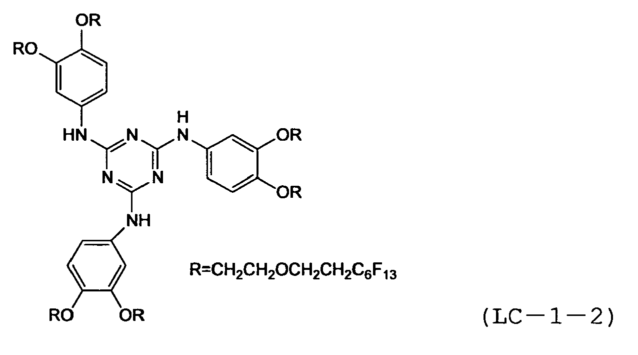

### (Preparation of Coating Liquid AD-1 for Adhesive Layer for Transfer)

The composition below was prepared, filtered through a polypropylene filter having a pore size of 0.2 µm, and the filtrate was used as coating liquid AD-1 for forming an adhesive layer for transfer.

| Composition of Coating Liquid for forming Adhesive Layer for Transfer | (% by weight) |
|---|---|
| random copolymer of benzyl methacrylate/methacrylic acid/methyl methacrylate (copolymerization ratio (molar ratio)= 35.9/22.4/41.7, weight-average molecular weight=38,000) | 8.05 |
| KAYARAD DPHA (from Nippon Kayaku Co., Ltd.) | 4.83 |
| radical polymerization initiator (2-trichloromethyl-5-(p-styrylstyryl)-1,3,4-oxadiazole) | 0.12 |
| hydroquinone monomethyl ether | 0.002 |
| Megafac F-176-PF (from Dainippon Ink and Chemicals, Inc.) | 0.05 |
| propylene glycol monomethyl ether acetate | 34.80 |
| methyl ethyl ketone | 50.538 |
| methanol | 1.61 |

### (Preparation of Coating Liquid PP-K for Photosensitive polymer Layer)

**Table 1**

| (% by weight) | PP-K |
|---|---|
| K pigment dispersion | 25 |
| propylene glycol monomethyl ether acetate (PGMEA) | 8.0 |
| methyl ethyl ketone | 53.494 |
| binder 1 | 9.0 |
| DPHA solution | 4.2 |
| 2-trichloromethyl-5-(p-styrylstyryl)-1,3 ,4-oxadiazole | 0.160 |
| hydroquinone monomethyl ether | 0.002 |
| Megafac F-176PF (from Dainippon Ink and Chemicals, Inc.) | 0.044 |

Compositions listed in Table 1 are as follows.

### [Composition of K Pigment Dispersion]

| Composition of K Pigment Dispersion (%) | |
|---|---|
| carbon black (Special Black 250, from Degussa) | 13.1 |
| 5-[3-oxo-2-[4-[3,5-bis(3-diethyl aminopropyl aminocarbonyl)phenyl]aminocarbonyl]phenylazo]-butyroylaminobenzimidazolone random copolymer of benzyl methacrylate/methacrylic acid (72/28 by molar ratio, | 0.65 |
| weight-average molecular weight=37,000) | 6.72 |
| propylene glycol monomethyl ether acetate | 79.53 |

### [Composition of Binder 1]

| Composition of Binder 1 (%) | |
|---|---|
| random copolymer of benzyl methacrylate/methacrylic acid (78/22 by molar ratio, weight-average molecular weight=40,000) | 27.0 |
| propylene glycol monomethyl ether acetate | 73.0 |

### [Composition of DPHA]

| Composition of DPHA Solution (%) | |
|---|---|
| KAYARAD DPHA (from Nippon Kayaku Co., Ltd.) | 76.0 |
| propylene glycol monomethyl ether acetate | 24.0 |

Coating liquid PP-K for photosensitive polymer layer was obtained first by weighing K pigment dispersion and propyleneglycol monomethy ether acetate listed in Table 1 according to the amounts listed therein, mixing them at 24°C (±2°C), stirring the mixture at 150 rpm for 10 minutes, then weighing methyl ethyl ketone, binder 1, hydroquinone monomethyl ether, DPHA solution, 2,4-bis(trichloromethyl) -6-[4-(N,N-diethoxycabonylmethyl)-3-bromophenyl]-s- triazine, and Megafac F-176PF according to the amounts listed in Table 1, adding them to the mixture in this order at 25°C (±2°C), and stirring the mixture at 40°C (±2°C) at 150 rpm for 30 minutes.

### (Preparation of Coating Liquid for Photosensitive polymer Layer for RGB)

Next paragraphs will describe methods of preparing coating liquids for photosensitive polymer layers. Table 2 shows compositions of the individual coating liquids for forming the photosensitive polymer layers.

**Table 2**

| (% by weight) | PP-R | PP-G | PP-B |
|---|---|---|---|
| R pigment dispersion-1 | 44 | - | - |
| R pigment dispersion-2 | 5.0 | - | - |
| G pigment dispersion | - | 24 | - |
| CF Yellow EC3393 (from Mikuni Color Works, Ltd.) | - | 13 | - |
| CF Blue EC3357 (from Mikuni Color Works, Ltd.) | - | - | 7.2 |
| CF Blue EC3383 (from Mikuni Color Works, Ltd.) | - | - | 13 |
| propylene glycol monomethyl ether acetate 7.6 (PGMEA) | | 29 | 23 |
| methyl ethyl ketone | 37.412 | 25.115 | 35.78 |
| cyclohexanone | - | 1.3 | - |
| binder 1 | - | 3.0 | - |
| binder 2 | 0.8 | - | - |
| binder 3 | - | - | 17 |
| DPHA solution | 4.4 | 4.3 | 3.8 |
| 2-trichloromethyl-5-(p-styrylstyryl)-1,3,4-oxadiazole | 0.14 | 0.15 | 0.15 |
| 2,4-bis(trichloromethyl)-6-[4-(N,N-diethoxycarbonylmethyl)-3-bromophenyl]-s-triazine | 0.058 | 0.060 | - |
| phenothiazine | 0.010 | 0.005 | 0.020 |
| HIPLAAD ED152 (from Kusumoto Chemicals) | 0.52 | - | - |
| Megafac F-176PF (from Dainippon Ink and Chemicals, Inc.) | 0.060 | 0.070 | 0.050 |

Compositions listed in Table 2 are as follows.

### [Composition R Pigment Dispersion-1]

| Composition of R Pigment Dispersion-1 (%) | |
|---|---|
| C.I.Pigment Red 254 | 8.0 |
| 5-[3-oxo-2-[4-[3,5-bis(3-diethyl aminopropyl aminocarbonyl)phenyl]aminocarbonyl]phenylazo]-butyroylaminobenzimidazolone | 0.8 |
| random copolymer of benzyl methacrylate/methacrylic acid (72/28 by molar ratio, weight-average molecular weight=37,000) | 8.0 |
| propylene glycol monomethyl ether acetate | 83.2 |

### [Composition of R Pigment Dispersion-2]

| Composition of R Pigment Dispersion-2 (%) | |
|---|---|
| C.I.Pigment Red 177 | 18.0 |
| random copolymer of benzyl methacrylate/methacrylic acid (72/28 by molar ratio, weight-average molecular weight=37,000) | 12.0 |
| propylene glycol monomethyl ether acetate | 70.0 |

### [Composition of G Pigment Dispersion]

| Composition of G Pigment Dispersion (%) | |
|---|---|
| C.I.Pigment Green 36 | 18.0 |
| random copolymer of benzyl methacrylate/methacrylic acid (72/28 by molar ratio, weight-average molecular weight=37,000) | 12.0 |
| cyclohexanone | 35.0 |
| propylene glycol monomethyl ether acetate | 35.0 |

### [Composition of Binder 2]

| Composition of Binder 2 (%) | |
|---|---|
| random copolymer of benzyl methacrylate/methacrylic acid/methyl methacrylate (38/25/37 by molar ratio, weight-average molecular weight=30,000) | 27.0 |
| propylene glycol monomethyl ether acetate | 73.0 |

### [Composition of Binder 3]

| Composition of Binder 3 (%) | |
|---|---|
| random copolymer of benzyl methacrylate/methacrylic acid/methyl methacrylate(36/22/42 by molar ratio, weight-average molecular weight=30,000) | 27.0 |
| propylene glycol monomethyl ether acetate | 73.0 |

### (Preparation of Coating Liquid PP-R for Photosensitive polymer Layer)

Coating liquid PP-R for the photosensitive polymer layer was obtained first by weighing R pigment dispersion-1, R pigment dispersion-2 and propylene glycol monomethyl ether acetate listed in Table 2 according to the amounts listed therein, mixing them at 24°C (±2°C), stirring the mixture at 150 rpm for 10 minutes, weighing methyl ethyl ketone, binder 2, DPHA solution, 2-trichloromethyl-5- (p-styrylstyryl)-1,3,4-oxadiazole, 2,4-bis (trichloromethyl)-6-[4-(N,N-diethoxycarbonylmethyl)-3-bromophenyl]-s-triazine, and phenothiazine according to the amounts listed in Table 2, adding them to the mixture in this order at 24°C (±2°C), stirring the mixture at 150 rpm for 10 minutes, weighing ED152 according to the amount listed in Table 2, adding it to the mixture at 24°C (±2°C), stirring the mixture at 150 rpm for 20 minutes, weighing Megafac F-176PF according to the amount listed in Table 1, adding it to the mixture at 24°C (+2°C), stirring the mixture at 30 rpm for 30 minutes, and filtering the mixture through a #200 nylon mesh.

### (Preparation of Coating Liquid PP-G for Photosensitive polymer Layer)

Coating liquid PP-G for photosensitive polymer layer was obtained first by first weighing G pigment dispersion, CF Yellow EX3393 and propylene glycol monomethyl ether acetate according to the amounts listed in Table 1, mixing them at 24°C (±2°C), stirring the mixture at 150 rpm for 10 minutes, then weighing methyl ethyl ketone, cyclohexanone, binder 1, DPHA solution, 2-trichloromethyl- 5-(p-styrylstyryl)-1,3,4-oxadiazole, 2,4-bis (trichloromethyl)-6-[4-(N,N-diethoxycarbonylmethyl)-3-bromophenyl]-s-triazine, and phenothiazine according to the amounts listed in Table 2, adding them to the mixture in this order at 24°C (±2°C), stirring the mixture at 150 rpm for 30 minutes, then weighing Megafac F-176PF according to the amount listed in Table 2, adding it to the mixture at 24°C (±2°C), stirring the mixture at 30 rpm for 5 minutes, and filtering the mixture through a #200 nylon mesh.

### (Preparation of Coating Liquid PP-B for Photosensitive polymer Layer)

Coating liquid PP-B for photosensitive polymer layer was obtained first by weighing CF Blue EX3357, CF Blue EX3383 and propylene glycol monomethyl ether acetate according to the amounts listed in Table 1, mixing them at 24°C (±2°C), stirring the mixture at 150 rpm for 10 minutes, then weighing methyl ethyl ketone, binder 3, DPHA solution, 2-trichloromethyl-5-(p-styrylstyryl)-1,3,4-oxadiazole, and phenothiazine according to the amounts listed in Table 2, adding them to the mixture in this order at 25°C (±2°C), stirring the mixture at 40°C (±2°C) at 150 rpm for 30 minutes, then weighing Megafac F-176PF according to the amount listed in Table 2, adding it to the mixture at 24°C (±2°C), stirring the mixture at 30 rpm for 5 minutes, and filtering the mixture through a #200 nylon mesh.

### (Production of Transfer Material of Example 1)

To the surface of a temporary support formed of a 100-µ m-thick polyethylene terephthalate film with easily adhesible property (COSMOSHINE A4100 from Toyobo Co., Ltd.), the coating liquid for a dynamic property control layer CU-1, and the coating liquid for an alignment layer AL-1, in this order were applied by using a wire bar coater and dried. The obtained layers had dry film thickness of 14 . 6 µ m and 1.6 µ m, respectively. Next the coating liquid for optically anisotropic layer, LC-1, was applied to the surface using a wire bar coater, dried under heating at 105°C on the surface of the film for 2 minutes, to thereby obtain a layer of a liquid crystal phase. The coated layer was then illuminated in the air atmosphere by ultraviolet radiation by using a 160W/cm, air-cooled metal halide lamp (product of Eyegraphics Co., Ltd.), so as to fix the alignment state of the phase to thereby obtain a 1.8-µm-thick optically anisotropic layer. Finally, the coating liquid for adhesive layer for transfer, AD-1, was applied to surface, dried to obtain a photosensitive polymer layer of 1.0-µm-thick, to thereby obtain a transfer material of Example 1.

### (Measurement of Retardation)

Frontal retardation at wavelength λ, was measured using a fiber-type spectrometer based on the parallel Nicol method. Each of oblique +40° retardation and oblique -40° retardation at wavelength of 590 nm was also measured while inclining the sample by +40° and -40° using the slow axis as the axis of rotation. Results of the retardation measurements are shown in Table 3. The above "oblique +40° retardation" represents a retardation measured by applying light at wavelength of 590 nm from the direction inclined by +40° to the normal line direction of the layer using the slow axis as oblique axis (the axis of rotation).

**Table 3**

| Sample | Frontal Re(590) | oblique +40° Re (590) | oblique -40° Re (590) |
|---|---|---|---|
| Example 1 | 151.8 | 138.5 | 136.8 |

### (Production of Substrate for Liquid Crystal Display Device of Example 2)

A color filter substrate having black matrix and color filter of three color RGB on a glass substrate was formed by a general method described on page 240 of "Color Liquid Crystal Display" edited by Shunsuke Kobayashi, Sangyo Tosho (1994). The above-described transfer material of Example 1 was then laminated onto the color filter substrate preheated at 100°C for 2 minutes, using a laminator (product of Hitachi Industries Co., Ltd. (model Lamic II)) under a rubber roller temperature of 130°C, a line pressure of 100 N/cm and a travel speed of 2.2 m/min. After the temporary support was separated therefrom, the substrate was subjected to UV exposure in a pattern making manner, using a proximity-type exposure apparatus having an extra-high-voltage mercury lamp (product of Hitachi Electronics Engineering Co., Ltd.), wherein the substrate and a mask (quartz-made photomask having an image pattern formed thereon) were vertically held while keeping a distance between the surface of the photomask and the photosensitive polymer layer of 200 µm away from each other, so that the exposure energy were 25 mJ/cm² for R patterned region, 22 mJ/cm² for G patterned region, and 16 mJ/cm² for B patterned region. Subsequently, the substrate was baked in a muffle furnace at 230°C for one hour to obtain a substrate for liquid crystal display device of Example 2 having a retardation pattern as shown in Fig. 3 (a). Further, a substrate for liquid crystal display device of Comparative Example 1 was produced in a similar manner to that of Example 2, except that a whole-area exposure at exposure energy of 22 mJ/cm² was conducted instead of UV light exposure in a pattern making manner.

It is very difficult to measure Re of each pattern R, G, and B in a substrate for liquid crystal display device, because the pattern is microscopical. Therefore, each Re is determined by the following method.

Non patterned color filter of each color of R, G, and B was produced in a similar manner to that of the production of the above color filter substrate having color filter of three colors RGB. On each of the color filters thus obtained, the transfer material of Example 1 was transferred in a same manner to that of the above Example 2, and the substrate was subjected to an exposure of the same condition as that used for the production of substrate for liquid crystal display devices of Example 2 and Comparative Example 1. By using thus-obtained substrate for liquid crystal display devices, Re of each pattern R, G, and B in the substrates for liquid crystal display devices of Example 2 and Comparative Example 1 were determined. That is, in order to determine Re of each pattern R, G, and B in the substrates for liquid crystal display device of Example 2, each Re of substrates for liquid crystal display device, which were produced by conducting exposures at 25 mJ/cm², 22 mJ/cm², and 16 mJ/cm² to non patterned color filter substrates of R, G, and B, respectively, was measured. In addition, in order to determine Re of each parts R, G, and B in the substrates for liquid crystal display device of Comparative Example 1, each Re of substrates for liquid crystal display device, which were produced by conducting exposure at 22 mJ/cm² to non patterned color filter substrates of R, G, and B, was measured. Results are shown in Table 4.

**Table 4**

| Sample | R pattern Frontal Re(611) | G pattern Frontal Re(545) | B pattern Frontal Re(435) |
|---|---|---|---|
| Example 2 | 152.8 | 136.4 | 109.1 |
| Comparative Example 1 | 134.2 | 136.0 | 147.1 |

### (Production of Substrates for Liquid Crystal Display Device of Example 3)

A non-alkali glass substrate was cleaned using a rotating nylon-haired brush while spraying a glass cleaner solution conditioned at 25°C by a shower for 20 seconds. After showered with purified water, the substrate was sprayed with a silane coupling solution (0.3% aqueous solution of N-β-(aminoethyl) -γ-aminopropyl trimethoxysilane, trade name:KBM-603, Shin-Etsu Chemical Co., Ltd.) by a shower for 20 seconds, and then cleaned with a shower of purified water. The obtained substrate was then heated in a substrate preheating heater at 100°C for 2 minutes.

On the above glass substrate, a coating solution for alignment layer AL-2 (RN1199A, Nissan Kagaku Kogyo Co., Ltd.) was applied and dried. The substrate was then baked at 220°C for one hour to prepare an alignment layer. The thickness of the alignment layer after baking was 60 nm.

The alignment layer was then subjected to a rubbing treatment. On the alignment layer after the treatment was applied with the coating solution for optically anisotropic layer LC-1. The coated layer was dried under heating at 105°C on the surface of the film for 2 minutes, to thereby obtain a layer of a liquid crystal phase. The coated layer was then illuminated in the air atmosphere by ultraviolet radiation by using a 160W/cm, air-cooled metal halide lamp (product of Eyegraphics Co. , Ltd.), at luminance of 240 mW/cm², and irradiation energy of 600 mJ/cm² so as to fix the alignment state of the phase. A substrate for liquid crystal display device before pattern formation as shown in Fig. 1(d) having a 1.8-µm-thick optically anisotropic layer was thus produced.

On the substrate for liquid crystal display device before pattern formation, the coating liquid PP-K for photosensitive polymer layer was applied and dried to obtain a photosensitive polymer layer of dry film thickness of 2.0 *µ*m. The obtained substrate was subjected to a pattered exposure at exposure energy of 500 mJ/cm² using a proximity-type exposure apparatus having an extra-high-voltage mercury lamp (product of Hitachi Electronics Engineering Co., Ltd.), wherein the substrate and a mask (quartz-made photomask having an image pattern formed thereon) were vertically held while keeping a distance between the surface of the photomask and the photosensitive polymer layer of 200 µm m away from each other.

The photosensitive polymer layer was developed using a shower of a mixture solution of a sodium carbonate-base developing solution (containing 0.06 mol/L of sodium hydrogencarbonate, sodium carbonate of the same concentration, 1% of sodium dibutylnaphthalene sulfonate, anionic surfactant, defoaming agent and stabilizer, trade name: T-CD1, product of Fuji Photo Film Co., Ltd.) and 2-propanol under a conical nozzle pressure of 0.15 MPa, and subjected to a polyester brush treatment to obtain black matrix. A substrate with black matrix was thus obtained.

UV light exposure was conducted in a pattern making manner, using a proximity-type exposure apparatus having an extra-high-voltage mercury lamp (product of Hitachi Electronics Engineering Co., Ltd.), wherein the substrate and a mask (quartz-made photomask having an image pattern formed thereon) were vertically held while keeping a distance between the surface of the photomask and the photosensitive polymer layer of 200 µm away from each other, so that the exposure energy were 63 mJ/cm² for R patterned region, 55 mJ/cm² for G patterned region, and 40 mJ/cm² for B patterned region. Subsequently, the substrate was baked at 230°C for one hour to obtain a substrate for liquid crystal display device having a retardation pattern.

On the substrate, the coating liquid PP-R for the photosensitive polymer layer was applied and dried to form a photosensitive polymer layer of dried film thickness of 2.0 *µ*m. The layer was then subjected to a similar step to that for the above black matrix except exposure energy of 100 mJ/cm² was used to thereby obtain R pixel pattern. The obtained substrate with R pixel was heated in a substrate preheating heater at 100°C for 2 minutes. On the substrate, the coating liquid PP-G for the photosensitive polymer layer was applied and dried to form a photosensitive polymer layer of dried film thickness of 2.0 µm. The layer was then subjected to a similar step to that for the above R pixel to thereby obtain G pixel pattern. Further, the coating liquid PP-B for the photosensitive polymer layer was applied and dried to form a photosensitive polymer layer of dried film thickness of 2.0 µm. The layer was then subj ected to a similar step to that for the above R and G pixels to thereby obtain B pixel pattern. The resulting substrate with RGB image formed was baked at 230°C for one hour to obtain a substrate for liquid crystal display device of Example 3 having a retardation pattern as shown in Fig. 3 (c). Further, a substrate for liquid crystal display device of Comparative Example 2 was produced in a similar manner to that of Example 3, except that a whole-area exposure at exposure energy of 55 mJ/cm² was conducted instead of UV light exposure in a pattern making manner to each of RGB patterning region.

### (Production of Substrates for Liquid Crystal Display Device of Example 4)

A substrate for liquid crystal display device of Example 4 having a retardation pattern as shown in Fig. 3 (c) was obtained by forming a color filter on a substrate with black matrix prepared in the same manner as that of Example 3, except the UV light exposure in a pattern making manner for each of RGB pattern region in the optically anisotropic layer was not conducted and the exposure energy of 212 mJ/cm² for R pixel, 155 mJ/cm² for G pixel, and 107 mJ/cm² for B pixel were used instead of 100 mJ/cm².

### (Measurement of Retardation)

The above substrate for liquid crystal display device before pattern formation was subjected to each exposure of the exposure conditions used for the productions of the substrate for liquid crystal display device of Example 3, Example 4, and Comparative Example 2 to thereby obtain an optically anisotropic substrate. On the optically anisotropic substrate, non-patterned color filter of each of R, G, and B was formed in a similar manner to that of the above production of the color filter substrate having color filter of three colors RGB. The substrates thus obtained were used for the determination of each Re value of RGB pattern region of Example 3, Example 4, and Comparative Example 2. That is, in order to determine each Re of RGB pattern regions of the substrate of Example 3, on each optically anisotropic substrate formed through non-patterned exposure with 63 mJ/cm², 55 mJ/cm², or 40 mJ/cm², non-patterned color filter of R, G, or B was formed, respectively. In the same manner, in order to determine each Re of RGB patterned regions of the substrate of Comparative Example 2, on optically anisotropic substrate formed through non-patterned exposure with exposure energy of 55 mJ/cm², non-patterned color filter of R, G, or B was formed. The result of measurement of Re values of these substrates for liquid crystal display device is shown in Table 5.

**Table 5**

| Sample | R pattern Frontal Re(611) | G pattern Frontal Re(545) | B pattern Frontal Re(435) |
|---|---|---|---|
| Example 3 | 153.4 | 136.0 | 110.0 |
| Example 4 | 152.8 | 137.1 | 110.8 |
| Comparative Example 2 | 133.5 | 136.5 | 146.8 |

### (Production of VA-mode Liquid Crystal Display Device of each Example)

As the opposing substrate, a glass substrate having a TFT layer provided thereon was prepared and provided with a transparent electrode film by sputtering of an ITO. Further thereon, a polyimide orientation film was provided. An epoxy polymer sealing material containing spacer grains was printed at positions corresponding to the outer contour of the black matrix provided around the pixel group of the color filter. The opposing substrate thus obtained was attached to each substrate for liquid crystal display device of Example 2, Example 3, Example 4, Comparative Example 1, and Comparative Example 2 under a pressure of 10 kg/cm. Thus attached glass substrates were then annealed at 150°C for 90 minutes so as to allow the sealing material to cure, and thereby a stack of two glass substrates was obtained. The stack of the glass substrates was degassed in vacuo, and a liquid crystal was introduced therebetween by recovering the atmospheric pressure, to thereby obtain a VA-mode liquid crystal cell. On both surfaces of the liquid crystal cell, polarizer plates HLC2-2518 from Sanritz Corporation were respectively attached. A three-band-phosphor-type white fluorescent lamp having an arbitrary color tone was produced as a cold-cathode-tube back light for color liquid crystal display device, using a phosphor composed of a 50:50 mixture on the weight basis of BaMg₂Al₁₆O₂₇:Eu,Mn and LaPO₄:Ce,Tb for green (G), Y₂O₃: Eu for red (R), and BaMgAl₁₀O₁₇:Eu for blue (B). The above-described VA-mode liquid crystal cell having the polarizer plates bonded thereto was disposed on this back light, to thereby produce VA-mode liquid crystal display device.

Results of visual observation of VA-mode liquid crystal display device obtained from each substrate for liquid crystal display device are shown in Table 6.

**Table 6**

| Sample | Results of Visual Observation |
|---|---|
| | Small viewing angle dependence of contrast, |
| Example 2 | showing almost non-sensible color shift in the black state Small viewing angle dependence of contrast, |
| Example 3 | showing almost non-sensible color shift in the black state. Small viewing angle dependence of contrast, |
| Example 4 | showing almost non-sensible color shift in the black state |
| Comparative Example 1 | Large viewing angle dependence of contrast, showing sensible color shift in the black state |
| Comparative Example 2 | Large viewing angle dependence of contrast, showing sensible color shift in the black state |

### Industrial Applicability

By the process of the present invention, a substrate for liquid crystal display device which contribute to reducing viewing angle dependence of color of a liquid crystal display device can be obtained while keeping costs low with reduced number of steps and easy steps.

## Claims

1. A process of producing a substrate for liquid crystal display device comprising an optically anisotropic layer, which comprises forming the optically anisotropic layer by a process comprising the following [1] to [3]:
[1] preparing a substrate having a raw optically anisotropic layer;
[2] subjecting the raw optically anisotropic layer to patterned exposures of two or more types having different exposure conditions to each other;
[3] subjecting the substrate obtained after the exposure to a heat treatment at 80°C or higher and 400°C or lower.

2. The process according to claim 1, wherein [1] is conducted by transferring the raw optically anisotropic layer from a transfer material to a substrate.

3. The process according to claim 2, wherein an adhesive layer or a photosensitive, pressure-sensitive, or heat-sensitive polymer layer is provided between the substrate and the raw optically anisotropic layer.

4. The process according to claim 1, wherein the raw optically anisotropic layer is directly formed on the substrate.

5. The process according to claim 1, wherein the raw optically anisotropic layer is directly formed on a rubbed alignment layer which is formed on the substrate.

6. The process according to any one of claims 1 to 5, wherein in-plane retardation of the raw optically anisotropic layer is 40 to 550 nm.

7. The process according to any one of claims 1 to 6, wherein material for forming the optically anisotropic layer comprises polymer.

8. The process according to claim 7, wherein the polymer has at least one polymerizable group selected from the group consisting of acrylic group, methacrylic group, vinyl ether group, oxetanyl group, and epoxy group.

9. The process according to any one of claims 1 to 8, wherein the raw optically anisotropic layer is a layer formed by coating with a solution comprising a liquid crystalline compound having a reactive group, and drying of the solution to thereby form a liquid crystal phase, and then applying heat or irradiating ionized radiation to the liquid crystal phase.

10. The process according to claim 9, wherein the liquid crystalline compound has at least one reactive group for radical polymerization and at least one reactive group for cationic polymerization.

11. The process according to claim 10, wherein the reactive group for radical polymerization is acrylic group or methacrylic group, and the reactive group for cationic polymerization is vinyl ether group, oxetanyl group, or epoxy group.

12. The process according to any one of claims 9 to 11, wherein the liquid crystalline compound is a rod-like liquid crystalline compound.

13. The process according to any one of claims 1 to 8, wherein the raw optically anisotropic layer is a stretched film comprising a compound having at least one reactive group.

14. The process according to claim 13, wherein the stretched film is attached to the substrate with adhesive, directly or via another layer.

15. The process according to any one of claims 1 to 14 wherein the substrate has a color filter layer.

16. A substrate for liquid crystal display device having an optically anisotropic layer having three or more different retardations to each other in a patterned manner, which is produced by the process according to any one of claims 1 to 15.

17. The substrate for liquid crystal display device according to claim 16, which has a color filter and the pattern of the retardation corresponds to color of the color filter.

18. A liquid crystal display device which has the substrate for liquid crystal display device according to claim 16 or 17.

19. The liquid crystal display device according to claim 18, employing a TN, VA, IPS, FFS, or OCB mode as a liquid crystal orientation mode.

20. A process of producing an optically anisotropic layer, which comprises the following [1] and [2]:
[1] subjecting a material for forming optically anisotropic layer in a film shape to patterned exposures of two or more types having different exposure conditions to each other;
[2] subjecting the substrate obtained after the exposure to a heat treatment at 80°C or higher and 400°C or lower.
